(19) Europäisches Patentamt
European Patent Office
Office européen des brevets

(11) **EP 3 877 863 B1**

(12) **EUROPEAN PATENT SPECIFICATION**

(45) Date of publication and mention
of the grant of the patent:
**24.04.2024 Bulletin 2024/17**

(21) Application number: **18845422.7**

(22) Date of filing: **13.12.2018**

(51) International Patent Classification (IPC):
**G06F 15/173** *(2006.01)*

(52) Cooperative Patent Classification (CPC):
**G06F 15/17318**

(86) International application number:
**PCT/RU2018/000820**

(87) International publication number:
**WO 2020/122750 (18.06.2020 Gazette 2020/25)**

(54) **APPARATUS, METHOD AND COMPUTER PROGRAM PRODUCT FOR PERFORMING A COLLECTIVE COMMUNICATION OPERATION IN A DATA COMMUNICATIONS NETWORK**

VORRICHTUNG, VERFAHREN UND COMPUTERPROGRAMMPRODUKT ZUR DURCHFÜHRUNG EINER GEMEINSAMEN KOMMUNIKATIONSOPERATION IN EINEM DATENKOMMUNIKATIONSNETZWERK

APPAREIL, PROCÉDÉ ET PRODUIT-PROGRAMME INFORMATIQUE POUR EFFECTUER UNE OPÉRATION DE COMMUNICATION COLLECTIVE DANS UN RÉSEAU DE COMMUNICATION DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.09.2021 Bulletin 2021/37**

(73) Proprietor: **Huawei Technologies Co., Ltd.
Longgang District
Shenzhen, Guangdong 518129 (CN)**

(72) Inventors:
• **ZHANG, Xuecang
Shenzhen Guangdong, 518129 (CN)**
• **KOLMAKOV, Dmitry Sergeevich
Shenzhen Guangdong, 518129 (CN)**

(74) Representative: **Gill Jennings & Every LLP
The Broadgate Tower
20 Primrose Street
London EC2A 2ES (GB)**

(56) References cited:
• **RUEFENACHT MARTIN ET AL: "Generalisation of recursive doubling for AllReduce: Now with simulation", PARALLEL COMPUTING, vol. 69, 1 November 2017 (2017-11-01), pages 24-44, XP085241934, ISSN: 0167-8191, DOI: 10.1016/J.PARCO.2017.08.004**

**Description**

TECHNICAL FIELD

The present disclosure relates to the field of data processing, and, more specifically, to a method, apparatus, and computer program product for performing a collective communication operation on multiple compute nodes in a data communications network.

BACKGROUND

High-performance parallel computing (HPPC) is associated with using multiple compute nodes or processes to solve a task of interest faster or with higher accuracy. In particular, the HPPC is based on the fact that the task of interest can usually be divided into smaller subtasks, which may be executed simultaneously on the multiple compute nodes in accordance with some coordination rules. Such involvement of the compute nodes is also referred to as a collective communication operation, implying that a collective of compute nodes communicate with each other when solving the task of interest.

To perform the collective communication operation, different standards have been developed, including the Message Passing Interface (MPI). In general, the MPI provides a standardized means for communicating between the compute nodes, which supports both point-to-point and collective communications. This support allows implementing different types of the collective communication operation, among which an Allreduce operation is of great importance because it has been proven to be one of the most frequently used operations in the MPI.

More specifically, the Allreduce operation is a collective communication operation in which data items from all compute nodes are combined into a resultant, and the resultant is then distributed back to each of the compute nodes. Such combination of the data items may be performed by using a certain operator, such, for example, as an addition operator, multiplication operator, maximum operator, minimum operator, and so on, and the resultant may respectively be represented by a sum of all data items, product of all data items, maximum data item, minimum data item, and so on.

Many different algorithms have been recently proposed to implement the Allreduce operation on different platforms and network architectures. In particular, the OpenMPI and MPICH standards, which are two independent implementations of the MPI standard, require using two algorithms when executing the Allreduce operation, namely a recursive doubling algorithm and a ring algorithm. However, both of the recursive doubling algorithm and the ring algorithm suffer from the following drawbacks: the former is optimal for small data items and a power-of-two number of compute nodes, and the latter is optimal for big data items, while being applicable to any number of compute nodes. Thus, according to the OpenMPI and MPICH standards, the execution of the Allreduce operation involves switching between these two algorithms depending on the size of the data items and the number of the compute nodes, thereby increasing the execution time of the Allreduce operation.

One more algorithm optimal for big data items used in the Allreduce operation is a recursive halving algorithm. However, similar to the recursive doubling algorithm, the recursive halving algorithm works well only when the number of the compute nodes is a power of two.

Therefore, there is still a need for a new solution that allows mitigating or even eliminating the above-mentioned drawbacks peculiar to the prior art.

RUEFENACHT MARTIN ET AL: "Generalisation of recursive doubling for AllReduce: Now with simulation", PARALLEL COMPUTING, vol. 69, pages 24-33, discloses a recursive multiplying method to show reductions in execution time of AllReduce operations.

SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The present invention is defined by the appended claims. Embodiments not falling within the scope of the claims are exemplary.

It is an object of the present disclosure to provide a technical solution optimal for performing a collective communication operation efficiently for any size of data items and any number of compute nodes.

The object above is achieved by the features of the independent claims in the appended claims. Further embodiments and examples are apparent from the dependent claims.

Other features and advantages of the present invention will be apparent upon reading the following detailed description and reviewing the accompanying drawings.

BRIEF DESCRIPTION OF THE DRAWINGS

The essence of the present invention is explained below with reference to the accompanying drawings in which:

Fig. 1-6 show different collective communication operations known from the prior art;

Fig. 7 shows an illustrative representation of point-to-point communications implemented in each collective communication operation;

Fig. 8 shows an exemplary schedule for implementing an Allreduce operation by using a recursive doubling algorithm;

Fig. 9 shows an exemplary peer-to-peer network topology used in a ring algorithm;

Fig. 10 shows an exemplary schedule for a ReduceScatter operation implemented in the ring algorithm;

Fig. 11 shows an exemplary schedule for an Allgather operation in the ring algorithm;

Fig. 12 shows an exemplary schedule for the Allreduce operation in case of using a recursive halving algorithm;

Fig. 13 shows a block-scheme of an apparatus for performing a collective communication operation in a data communications network in accordance with one aspect of the present disclosure;

Fig. 14 shows a block-scheme of a method for performing the collective communication operation in the data communications network in accordance with another aspect of the present disclosure;

Fig. 15 shows a per-node data distribution and a permutation-based data distribution, which are both obtained during the method of Fig. 14;

Fig. 16 shows some examples of cyclic permutations used in the method of Fig. 14;

Fig. 17 shows one example of a basement data distribution used to obtain the permutation-based data distribution;

Fig. 18 shows a schedule for the bandwidth-optimized implementation of the Allreduce operation;

Fig. 19 explains how to reduce the number of the cyclic permutations used in the schedule for the Allreduce operation;

Fig. 20 explains how to reduce further the number of the cyclic permutations used in the schedule for the Allreduce operation;

Fig. 21 shows a schedule for the latency-optimized implementation of the Allreduce operation;

Fig. 22 shows a table listing different latency-to-bandwidth ratios for a different number of the cyclic permutations used in the schedule for the Allreduce operation;

Fig. 23 shows a table listing different optimal numbers of the cyclic permutations used in the schedule for the Allreduce operation;

Fig. 24 shows a table demonstrating the comparison of the prior art algorithms and the method of Fig. 14;

Figs. 25-28 show experimental results obtained by using the OpenMPI standard and the method of Fig. 14, taking into account two different networking mediums: inter-process communication in Linux OS and 10 Gigabit Ethernet.

DETAILED DESCRIPTION

Various embodiments of the present disclosure are further described in more detail with reference to the accompanying drawings. However, the present disclosure can be embodied in many other forms and should not be construed as limited to any certain structure or function disclosed in the following description. In contrast, these embodiments are provided to make the description of the present disclosure detailed and complete.

According to the present disclosure, it will be apparent to those skilled in the art that the scope of the present disclosure covers any embodiment, which is disclosed herein, irrespective of whether this embodiment is implemented independently or in concert with any other embodiment of the present disclosure. For example, the apparatus and method disclosed herein can be implemented by using any numbers of the embodiments provided herein. Furthermore, it should be understood that any embodiment of the present disclosure can be implemented using one or more of the elements or steps presented in the appended claims.

The term "collective communication operation" used herein is also known as simply "collective communication" or "collective operation", and refers to a concept in the HPPC, in which data are simultaneously sent to or received from multiple compute nodes in a certain manner. In other words, the execution of each collective communication operation involves a collaboration of compute nodes. Each collective communication operation consists of multiple point-to-point communications concurrently performed among the compute nodes.

The term "compute node" is defined as a means participating in a certain point-to-point (or node-to-node) communication being part of the collective communication operation. Correspondingly, multiple compute nodes performs multiple point-to-point communications in parallel, thereby executing the collective communication operation as a whole. It should be noted that the terms "compute node" and "compute process" are used interchangeably in the field the present disclosure pertains to.

There are many different types of standards that have been developed to attempt to simplify such parallel point-to-point communications of the data among the compute nodes. One such standard is the Message Passing Interface (MPI). The MPI standard is substantially a core library of routines that may be called by using different programming languages, such, for example, as FORTRAN, C and C++. It should be noted that the MPI standard is a specification rather than an implementation; there are multiple implementations of the MPI standard, such, for example, as the OpenMPI and MPICH standards. Each implementation of the MPI standard strictly defines its own core library of routines and Application Programming Interface (API) for all MPI functions or operations. Although the present disclosure is described further with reference to the MPI standard, it should not be construed as any limitation of the present disclosure, and those skilled in the art will understand that the MPI standard is selected only for illustrative purposes and may be replaced with any other suitable standard.

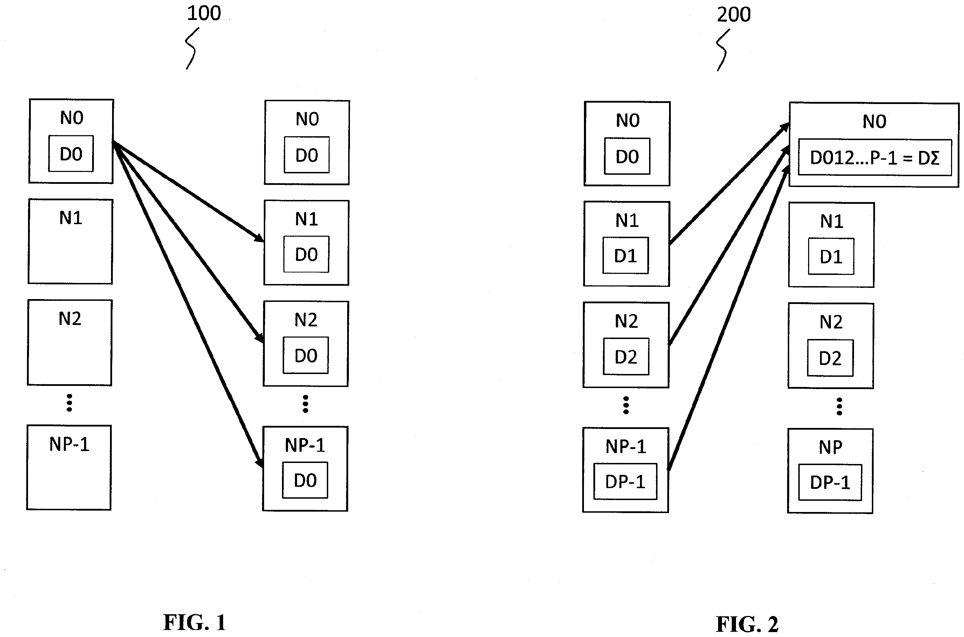

Referring to Figs. 1-6, different collective communication operations will be now described in more detail. Each collective communication operation is executed based on the simplest point-to-point communications in accordance with a certain standard, such as the MPI standard. In the figures, the compute nodes and the data items participating in the point-to-point communications are schematically shown as external and internal boxes, respectively, and the point-to-point communications themselves are schematically shown as single-headed arrows. Moreover, each of the compute nodes is provided with its own rank representing an integer ranging from 0 to P-1.

In particular, Fig. 1 shows a communication pattern 100 for a Broadcast operation, in which one compute node sends the same data to all compute nodes in a separate communication space or, in other words, communicator. According to the communication pattern 100, a compute node N0 is a root node, and it has an initial data item D0. As a result of the Broadcast operation, all other compute nodes N1 to NP-1 receive the copy of the same data item D0.

Fig. 2 shows a communication pattern 200 for a Reduce operation, in which data items from all compute nodes are combined into some resultant and the resultant is then assigned to a root node. According to the communication pattern 200, the compute nodes N0 to NP-1 have data items D0 to DP-1, respectively, with the compute node N0 serving as the root node. As shown in Fig. 2, the combination of the data items D0 to DP-1 is performed by using an addition operator $\Sigma$, so that the compute node N0 eventually comprises the sum of the data items D0 to DP-1, i.e. the caption "D012...P-1 = D$\Sigma$" is a shortened representation of "D0 + D1 + D2 + ... + DP-1 = D$\Sigma$". In other examples, the addition operator may be replaced with any other operator, such as a multiplication operator, maximum operator, minimum operator, and so on.

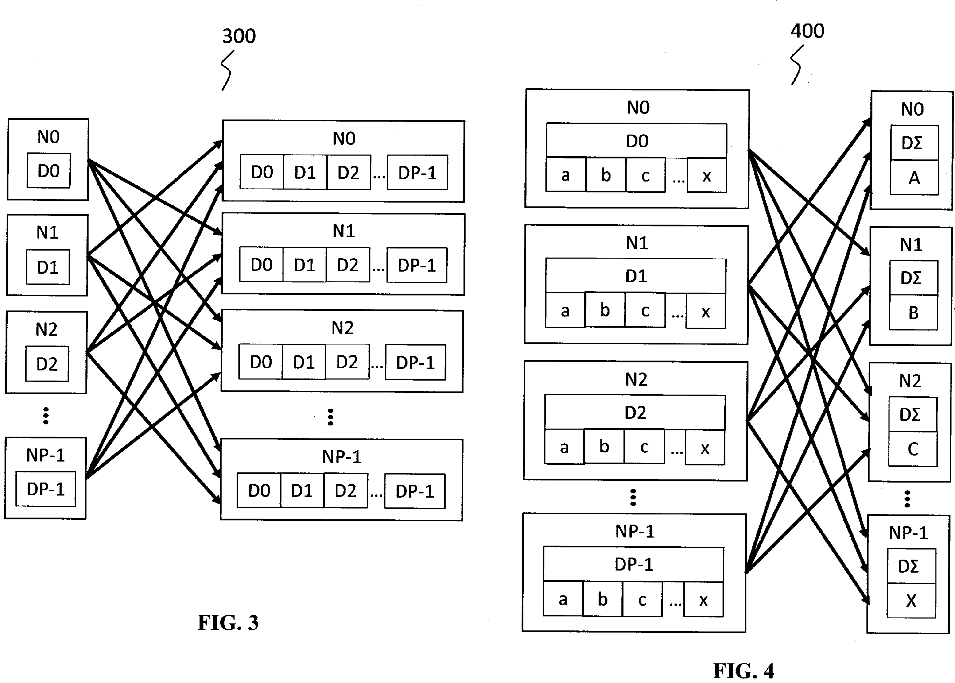

Fig. 3 shows a communication pattern 300 for an Allgather operation, in which data items provided by each compute node are gathered to all other compute nodes, with the data items being ordered in each compute node based on the ranks of the other compute nodes from which they were received. According to the communication pattern 300, the compute nodes N0 to NP-1 are initially arranged in accordance with their ranks 0 to P-1, so that the result of the Allgather operation is an ordered set D0 to DP-1 in each of the compute nodes N0 to NP-1.

Fig. 4 shows a communication pattern 400 for a ReduceScatter operation, in which data items from each compute node are combined into a resultant in a similar manner to the Reduce operation but the resultant is then scattered over all compute nodes. As a result, each compute node has a portion 1/P of the resultant. According to the communication pattern 400, each of the data items D0 to DP-1 is divided into the same number of elementary chunks a, b, c, ..., x, and the data items D0 to DP-1 are combined by using the addition operator $\Sigma$ such that the similarly-named chunks of the different data items are added together. Again, the addition operator is given only as an example. The resulting sum D$\Sigma$ is represented by new chunks A, B, C, ..., X, where A is equal to the sum of all chunks "a" of the data items, B is equal to the sum of all chunks "b" of the data items, and so on. Finally, the resulting sum D$\Sigma$ is scattered over the compute nodes N0 to NP-1 such that each compute node comprises respective one of the chunks A, B, C, ..., X.

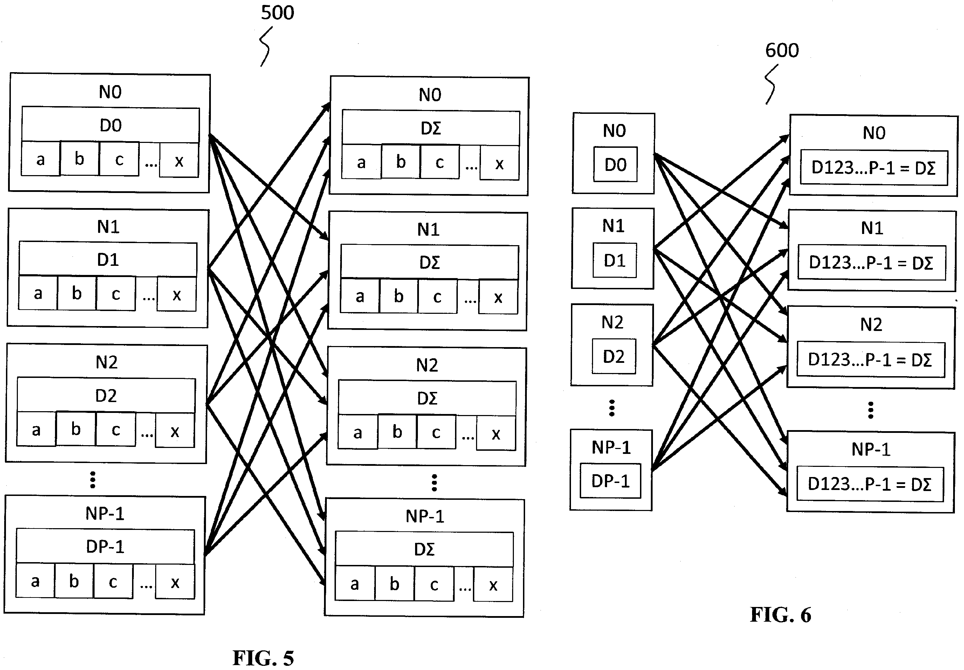

Figs. 5-6 show communication patterns 500 and 600, respectively, for an Allreduce operation, in which data items from all compute nodes are combined into some resultant in a similar manner to the Reduce operation but the copy of the resultant is then distributed back to each compute node. The only difference between the communication patterns 500 and 600 is that each of the data items D0 to DP-1 is represented by the chunks a, b, c, ..., x in Fig. 5, while Fig. 6 illustrates a simpler case in which the data items D0 to DP-1 are presented as single data items. According to Fig. 5, the chunks a, b, c, ..., x from the compute nodes N0 to NP-1 are subjected to the addition operator in the same manner as discussed above with reference to Fig. 4, and the resulting sum DΣ is further stored in each compute node. According to Fig. 6, the single data items D0 to DP-1 are added together, and their sum is then stored in each compute node.

As noted above, the Allreduce operation is one of the mostly used collective communication operations in the MPI-based HPPC applications. In particular, it has been found that the MPI-based HPPC applications spend about 20% of operational time exactly on the Allreduce operation (for more details, see "Automatic profiling of MPI applications with hardware performance counters" by Rolf Rabenseifner, In PVM/MPI, pages 35-42, 1999). Therefore, the present disclosure will be further described with reference to the Allreduce operation. At the same time, it should be again noted that the present disclosure is not limited to the Allreduce operation and its aspects may be applied to any other collective operations like those discussed above.

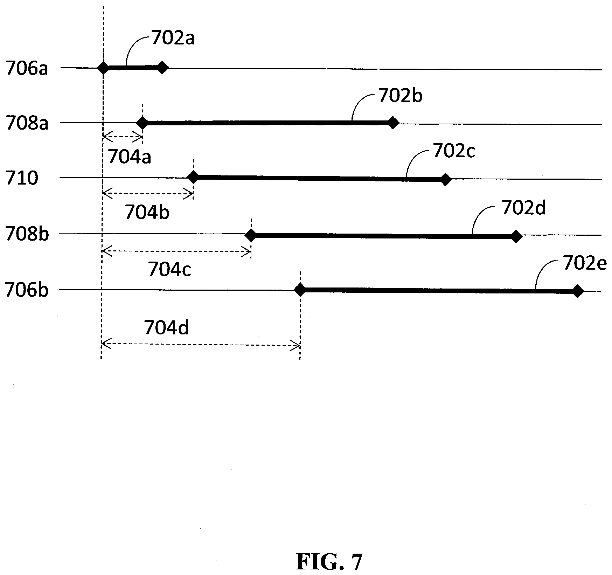

Fig. 7 is an illustrative representation of point-to-point communications implemented in each collective communication operation. Bold lines 702a-702e correspond to bandwidths used by different objects participating in the point-to-point communications, and lengths 704a-704d corresponds to different latencies between each point-to-point communication, counting from the beginning of the bandwidth 702a. More specifically, it is assumed that the first point-to-point communication is performed between a first user application 706a and a sender operating system (OS) 708a, the second point-to-point communication is performed between the sender OS 708a and a network 710, the third point-to-point communication is performed between the network 710 and a receiver OS 708b, and the last fourth point-to-point communication is performed between the receiver OS 708b and a second user application 706b. In this example, the user applications 706a, 706b and the OS 708a, 708b play the role of the compute nodes connected via the network 710. Each point-to-point communication or transmission may be presented as the following equation: $T = a + b \cdot D$, where $a$ is the latency term, b is the bandwidth coefficient, and $b \cdot D$ is the bandwidth term. As follows from the equation, when the size of the data or message is small enough, the bandwidth term becomes negligible and the time of the point-to-point communication is mainly defined by the latency term (see the first point-to-point communication). In the opposite case, i.e. when the size of the data or message is big enough, the time of the point-to-point communication is mainly defined by the bandwidth term (see, for example, the fourth point-to-point communication). Thus, the size of the data directly influences the point-to-point communication.

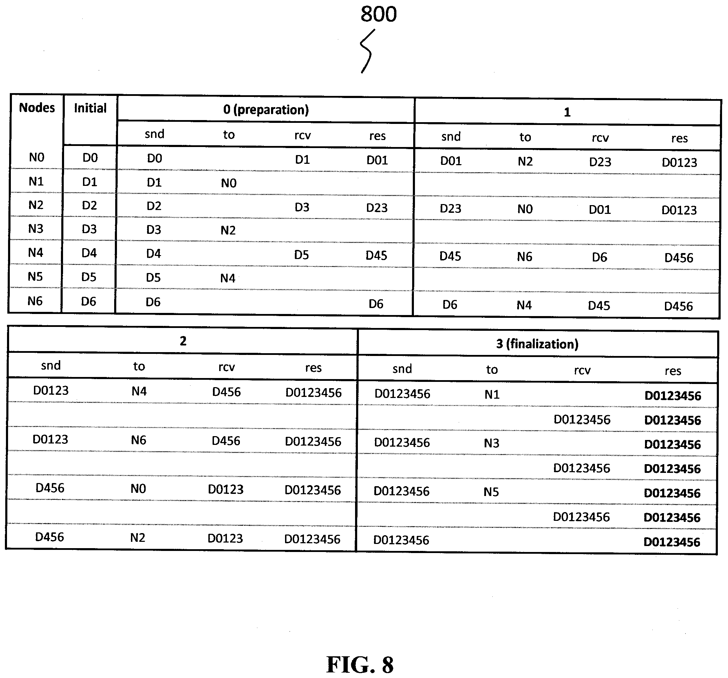

To attempt to optimize the implementation of the Allreduce operation, the OpenMPI and MPICH standards suggest switching between the recursive doubling algorithm and the ring algorithm depending on the size of the data used in the Allreduce operation. Each of the recursive doubling algorithm and the ring algorithm will now be disclosed in more detail with reference to Figs. 8-11.

Fig. 8 illustrates an exemplary schedule 800 for implementing the Allreduce operation by using the recursive doubling algorithm. In particular, it is assumed that the number of the compute nodes is equal to 7, so that the compute nodes is ranked from 0 to 6. Given this, each compute node comprises one of initially distributed data items D0 to D6 in accordance with the rank. Rows in the schedule 800 represent different intermediate point-to-point communications constituting the Allreduce operation. More specifically, each intermediate point-to-point communication is defined as follows: a data item is sent (see "snd" in Fig. 8) from one compute node and received (see "rev" in Fig. 8) in another compute node, thereby providing a certain partial combination (see "res" in Fig. 8). When there are several digits near uppercase letter "D", it means that the corresponding data item is represented by a partial combination (provided by the addition operator, for example) of the data items from the corresponding compute nodes. In this example, each compute node is assumed to have "D0123456" at the end of the Allreduce operation.

It should be noted that the recursive doubling algorithm is latency-optimized only when the number of the compute nodes is a power of two. In the example shown in Fig. 8, there are seven compute nodes N0 to N6, which makes the recursive doubling algorithm sub-optimal. To overcome this drawback and implement the Allreduce operation, the recursive doubling algorithm should be performed as follows:

- Step 0 or Preparation step: It is required to make the number of the compute nodes equal to the power of two. In this example, the preparation step is directed to reducing the number of the compute nodes to the nearest power of two, i.e. 4, by simply sending all the data items from the odd compute nodes to the even compute nodes.
- Steps 1 and 2: Each of these steps consists in the pairwise point-to-point communications of the data items among the reduced number of the compute nodes. In general, the number of such pairwise point-to-point communications is equal to $log(P)$ in each of steps 1 and 2.
- Step 3 or Finalization step: Since steps 1 and 2 are performed on the reduced number of the compute nodes, it is needed to send the same result to the other compute nodes taking no part in steps 1 and 2.

The complexity of the above-described approach for the recursive doubling algorithm is defined by

$$T = (\lfloor \log Pr \rfloor + 2) \cdot (a + bD),$$

where $Pr = 2^{\lfloor \log P \rfloor}$ is the nearest power-of-two number of the compute nodes, D is the size of a data array constituted by all data items. Given the above, one may retrieve the following drawbacks of the recursive doubling algorithm:

- Firstly, the recursive doubling algorithm works well on the power-of-two number of the compute nodes, and it requires two additional steps, i.e. steps 0 and 3, in case of the non-power-of-two number of the compute nodes.
- Secondly, in each step, the full data array is sent by each compute node, which actually leads to huge overhead in the bandwidth terms. Therefore, the recursive doubling algorithm is usually used for small data items in the OpenMPI and MPICH standards.

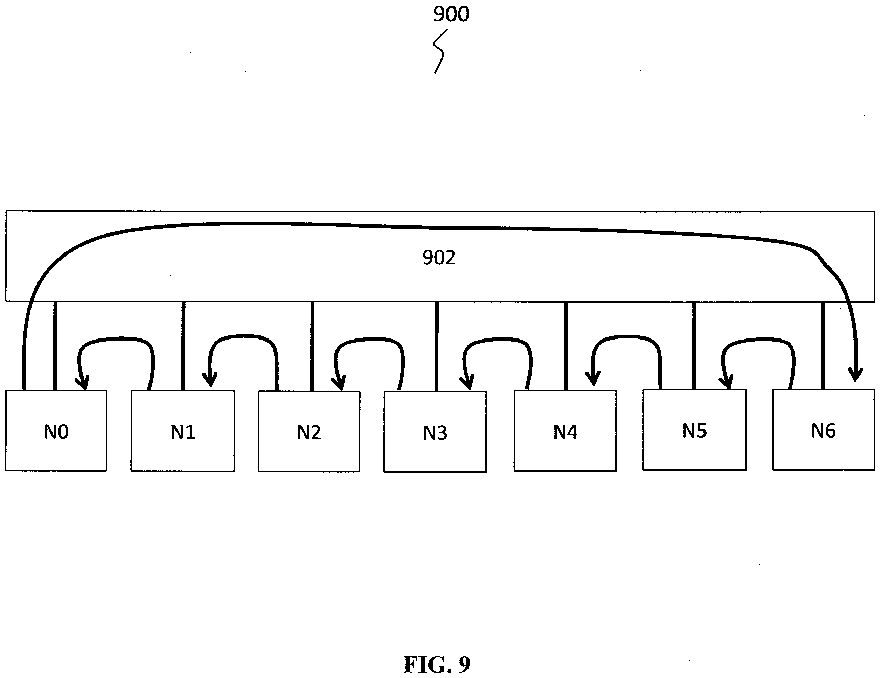

As for the ring algorithm, it requires building a logical ring connecting all the compute nodes, as schematically shown by arrows in Fig. 9 in which a peer-to-peer network topology 900 is used. With such network topology, the compute nodes N0 to N6 communicate with each other via a network switch 902 strictly in accordance with the logical ring. The ring algorithm for the Allreduce operation may be implemented by subsequently performing the ReduceScatter and Allgather operations, as discussed below.

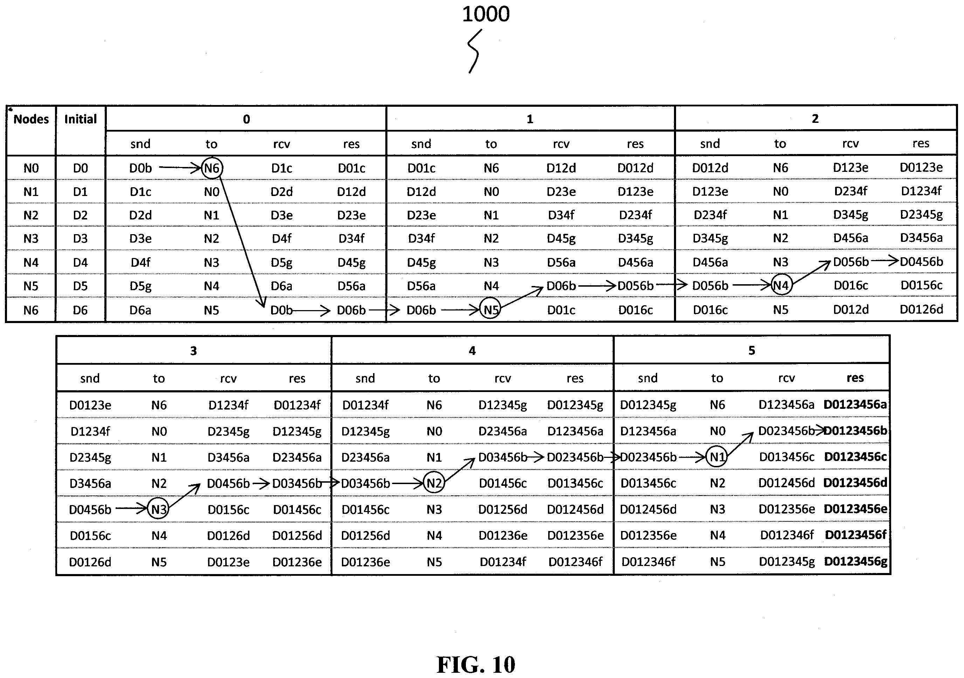

Fig. 10 illustrates an exemplary schedule 1000 for the ReduceScatter operation in the ring algorithm. The schedule 1000 has the same tabular structure as the schedule 800 for the recursive doubling algorithm. The only addition is that each of the data items D0 to D6 is divided into the same number (P = 7) of different elementary chunks "a, b, c, d, e, f, g". In this case, the ReduceScatter operation consists of steps 0 to 5, in each of which each compute node sends 1/P of the data item, i.e. one chunk of "a, b, c, d, e, f, g", to the next compute node in the logical ring, as shown by arrows in the schedule from the compute node N0 to the compute node N1. The received chunk from the previous compute is accumulated with the corresponding chunk of the local data item, i.e, for example, the chunk "a" can be accumulated only with the corresponding local chunk "a". At the end of the ReduceScatter operation, each compute node will own 1/P of the reduction result (for example, in the schedule 1000, the compute node N0 owns the chunk "a").

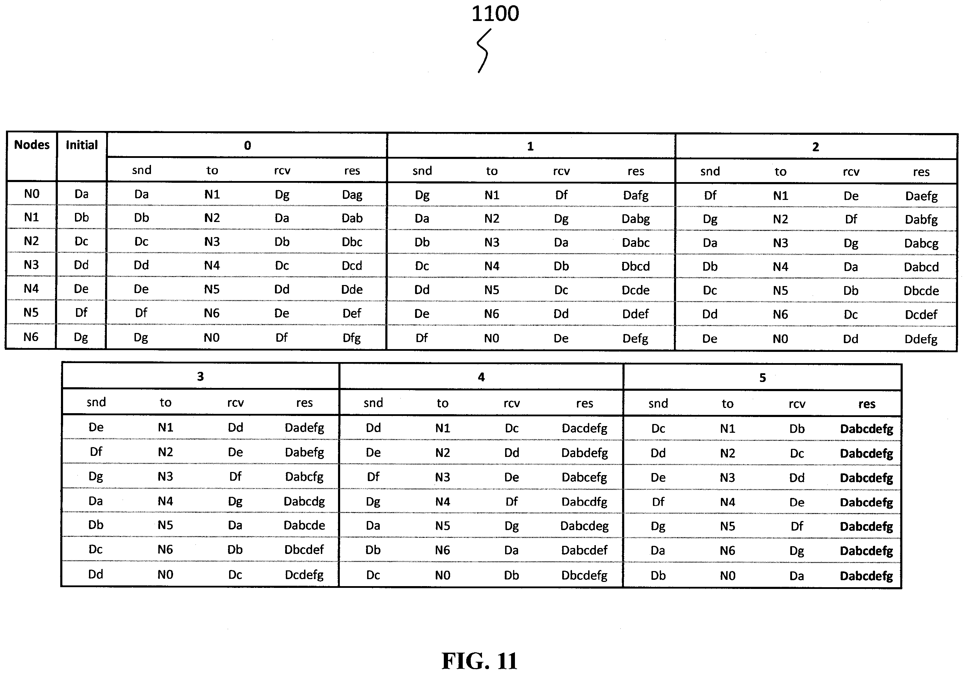

Fig. 11 illustrates an exemplary schedule 1100 for the Allgather operation in the ring algorithm. Again, the schedule 1100 has the same tabular structure as the schedule 1000 with the only difference that it does not require performing any accumulation and only involves concatenating the received chunks to obtain a bigger result. The Allreduce operation may be performed in the same direction over the logical ring or in the inverse direction as shown in the schedule 1100.

The complexity of the ring algorithm is defined by:

$$T = 2 \left( (P - 1) \cdot a + \frac{(P-1)}{P} \cdot bD \right).$$

Given the above, one may conclude that, unlike the recursive doubling algorithm, the ring algorithm is bandwidth-optimized for any number of the compute nodes and has constant complexity in the bandwidth terms. However, the main disadvantage of the ring algorithm is its linearity in the latency terms - it requires $2 \times (P - 1)$ steps (in particular, the example shown in Figs. 9-11 requires $2 \times (7 - 1) = 12$ steps). Therefore, the ring algorithm is used for big data items in OpenMPI and MPICH standards.

Yet another algorithm for implementing the Allreduce operation is a recursive halving algorithm (for more details, see the following information source: R. Thakur, R. Rabenseifner, W. Gropp. Optimization of Collective Communication Operations in MPICH, International Journal of High Performance Computing Applications, Volume 19, Issue 1, 2005). However, similar to the recursive doubling algorithm, the recursive halving algorithm is optimal only for the power-of-two number of the compute nodes. If the number of the compute nodes is not a power of two, the recursive halving algorithm becomes suboptimal since it requires the same additional preparation and finalization steps as the recursive doubling algorithm.

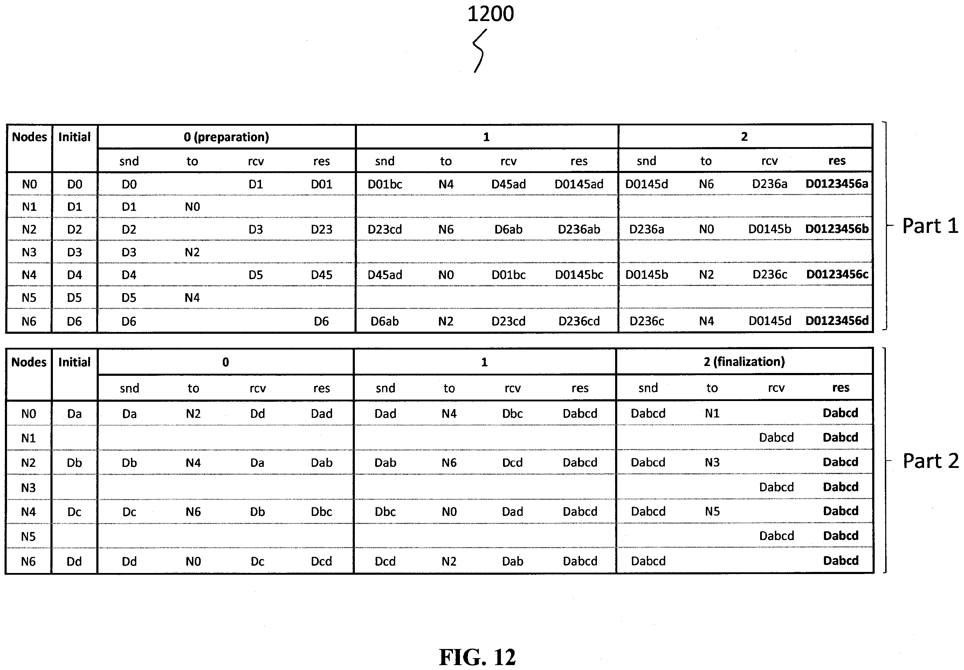

Fig. 12 illustrates an exemplary schedule 1200 for the Allreduce operation in case of using the recursive halving algorithm. Here it is again assumed that the number of the compute nodes is equal to 7, and the schedule 1200 itself has the same structure as the schedules 800, 1000 and 1100 discussed above. To overcome the drawback of the non-power-of-two number of the compute nodes and implement the Allreduce operation, the recursive halving algorithm should be performed as follows:

Part 1:

- Step 0 or Preparation step: The number of processes should be reduced to the nearest power of two, which is 4 in the example shown.
- Steps 1, 2 or ReduceScatter step: The compute nodes having even ranks send the second half of their buffer to the compute nodes having "rank+1" and the compute nodes having odd ranks send the first half of their buffer to the compute nodes having "rank-1". Each compute node performs the reduction operation between their local buffer and the received buffer. The reduced half is then used in the next step. For the next logP-1 steps, the buffer is halved and the distance between the compute nodes is doubled in each step. After that, each of the compute nodes has 1/P of the global result.

Part 2:

- Steps 0, 1 or Allgather step: In each step, the compute nodes double their local result by received chunks and doubles the distance of the communication.
- Step 2 or Finalization step: It is required to send the same result to the compute nodes taking no part in the preparation step.

The complexity of the recursive halving algorithm for the non-power-of-two case is defined by

$$T = 2\left((logPr + 1) \cdot a + \left(\frac{(Pr-1)}{Pr} + 1\right) \cdot bD\right),$$

where $Pr = 2^{\lfloor \log P \rfloor}$ is the nearest power-of-two number of the compute nodes.

Thus, the following main problems are peculiar to the above-described prior art algorithms:

1. The existing MPI libraries, like those provided by the OpenMPI and MPICH standards, implement the Allreduce operation as the collection of the different algorithms to be switched therebetween in operation depending on the size of the date items. Each of the algorithms is optimal for a very narrow set of network and data parameters. As a result, the allreduce operation thus implemented generally exhibits sub-optimal performance.
2. There is no general solution which would be optimal in the latency terms for the non-power-of-two number of the compute nodes.
3. There is no general solution which would be optimal in the bandwidth terms and require only 2*log*(*P*) steps for the non-power-of-two number of the compute nodes.

The present disclosure discussed below takes into account the above-mentioned drawbacks of the prior art, and is directed to providing a technical solution for performing a collective communication operation, in particular the Allreduce operation, efficiently irrespective of the size of the data items and the number of compute nodes involved.

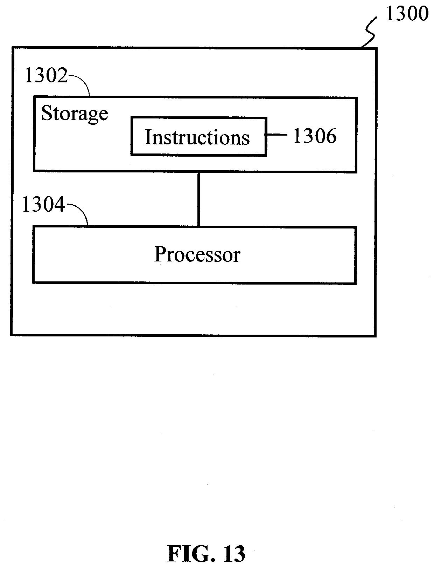

Fig. 13 shows an exemplary block-scheme of an apparatus 1300 for performing a collective communication operation in a data communications network comprising multiple compute nodes in accordance with one aspect of the present disclosure. As shown in Fig. 13, the apparatus 1300 comprises a storage 1302 and a processor 1304 coupled to the storage 1302. The storage 1302 stores executable instructions 1306 to be executed by the processor 1304 to perform the collective communication operation of interest. The data communications network is intended to have a peer-to-peer network topology like the one shown in Fig. 9, but this network topology should not be construed as any limitation of the present disclosure. It is also assumed that all channels between the compute nodes and the network switch are full-duplex, which means that bidirectional point-to-point communications through each channel is allowed. In other words, the point-to-point communication, for example, from compute node N1 to the compute node N3 does not influence the point-to-point communication from the compute node N3 to the compute node N1.

The storage 1302 may be implemented as a volatile or nonvolatile memory used in modern electronic computing machines. Examples of the nonvolatile memory include Read-Only Memory (ROM), flash memory, ferroelectric Random-Access Memory (RAM), Programmable ROM (PROM), Electrically Erasable PROM (EEPROM), solid state drive (SSD), magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

Relative to the processor 1304, it may be implemented as a central processing unit (CPU), general-purpose processor, single-purpose processor, microcontroller, microprocessor, application specific integrated circuit (ASIC), field programmable gate array (FPGA), digital signal processor (DSP), complex programmable logic device, etc. It should be also noted that the processor 1304 may be implemented as any combination of one or more of the aforesaid. As an example, the processor 1304 may be a combination of two or more microprocessors.

The executable instructions 1306 stored in the storage 1302 may be configured as a computer executable code which causes the processor 1304 to perform the aspects of the present disclosure. The computer executable code for carrying out operations or steps for the aspects of the present disclosure may be written in any combination of one or more programming languages, such as Java, C++ or the like. In some examples, the computer executable code may be in the form of a high level language or in a pre-compiled form, and be generated by an interpreter (also pre-stored in the storage 1302) on the fly.

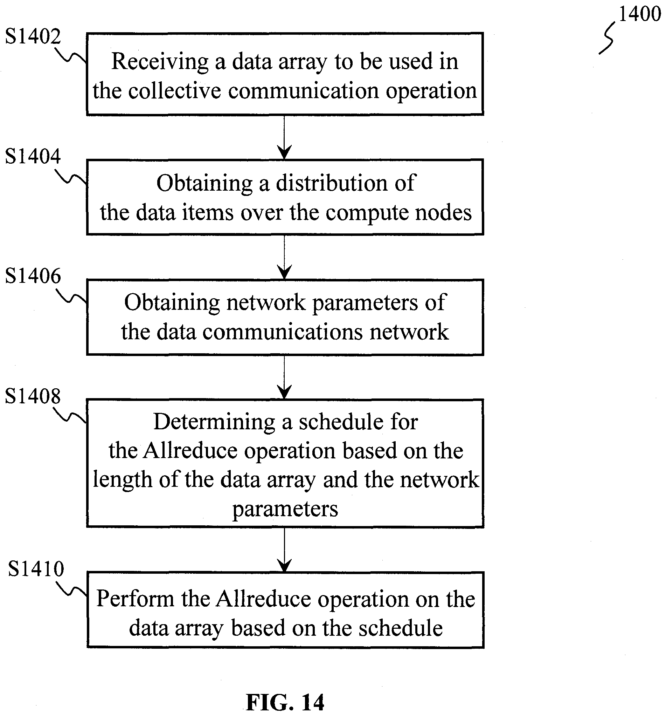

Fig. 14 shows a claimed block-scheme of a method 1400 for performing the collective communication operation of interest in accordance with another aspect of the present disclosure. In particular, the method 1400 is intended to be performed by the processor 1304 of the apparatus 1300 when the processor 1304 is caused by the instructions 1306 from the storage 1302 of the apparatus 1300. As shown in Fig. 14, the method 1400 starts with step S1402, in which the processor 1304 first receives a data array to be used in the collective communication operation of interest. For convenience, let us also assume that the Allreduce operation is to be performed by the processor 1304. The data array comprises data items and has a predefined size. The processor 1304 is further instructed, in step S1404, to obtain a distribution of the data items over the compute nodes. After that, the method 1400 proceeds to step S1406, in which the processor 1304 obtains network parameters of the data communications network. Next, in step S1408, the processor 1304 determines a schedule for the Allreduce operation based on the size of the data array, the network parameters, and the distribution of the data items. The at least one processor is eventually instructed, in step S1410, to perform the Allreduce operation on the data array in accordance with the schedule for the Allreduce operation. In the meantime, both the distribution of the data items and the schedule for the collective communication operation are based on cyclic permutations of the data items among the compute nodes.

The network parameters above may comprise a network bandwidth and a network latency, and the step S1406 may be executed by the processor 1304 with the aid of any user input means (not shown in Fig. 13) in one embodiment. The user input means may be implemented as part of the apparatus 1300 or as an individual device coupled to the apparatus 1300 through wire or wireless connections. For example, the apparatus 1300 may be a mobile device, such as a laptop or tablet, and the user input means may be implemented as a touchscreen or a wire or wireless mouse or keyboard coupled to the apparatus 1300. In another example, the user input means may be represented by a combination of speech recognition means and a microphone coupled to or additionally included in the apparatus 1300, thereby providing the possibility of feeding the network parameters into the processor 1304 through user speech. In another embodiment, the step S1406 may consist in downloading the network parameters, by the processor 1304, from a remote server and storing them in the storage 1302 prior to performing the Allreduce operation. Yet another embodiment is feasible, in which the step S1406 involves receiving, by the processor 1304, the network parameters directly from one or more special user applications installed on the apparatus 1300 implemented as the mobile device. However, it should be apparent to those skilled in the art that the present disclosure is not limited to the above-listed embodiments, and for example, any other embodiments or combinations of the above-listed and/or other embodiments may be used depending on particular applications.

One more embodiment of the step S1406 involves using a network analyzer (not shown in Fig. 13) to calculate the network parameters in real time. Network bandwidth and latency measurements may be performed using any existing methods with satisfactory accuracy. However, such methods are out of the scope of the present disclosure, and their description is therefore omitted herein.

It should be noted that the Allreduce operation may be presented as a combination of other different collective communication operations. For example, the simplest way to implement the Allreduce operation is to combine the Reduce operation shown in Fig. 2 with the Broadcast operation shown in Fig. 1. As noted above, the Reduce operation leads to a combination of all data items, such as $D\Sigma = D0 + D1 + D2 + ... + DP$, in a certain compute node, and the resultant is then distributed to all compute node in the Broadcast operation. The other way to implement the Allreduce operation is to combine the ReduceScatter operation shown in Fig. 4 with the Allgather operation shown in Fig. 3. In this case, the result of the ReduceScatter operation is represented by data items scattered over all compute nodes, and the Allgather operation is used to gather all the scattered data items in each compute node.

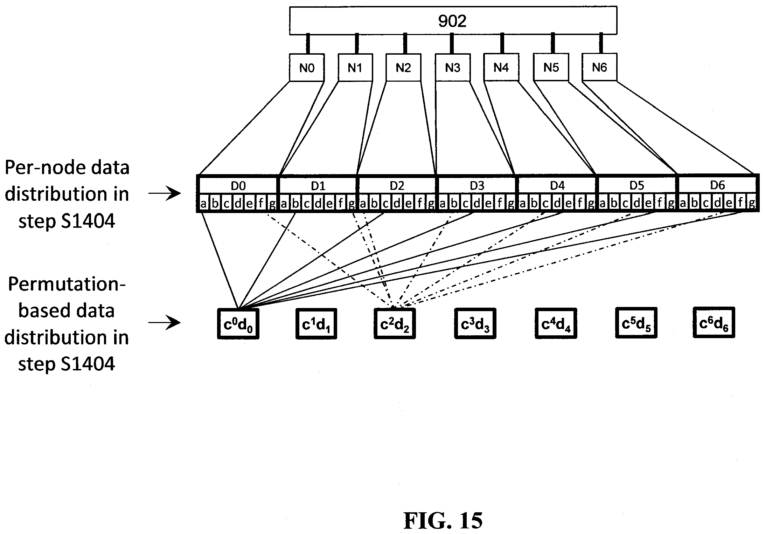

Referring to Fig. 15, the step S1404 of the method 1400 will be now explained in more detail. In particular, it is again assumed that the number of the compute nodes is equal to 7, and the compute nodes N0 to N6 are communicated with each other via the same network switch 902 which implements the peer-to-peer network topology providing the full-duplex channels between the compute nodes. The step S1404 may divided into two substeps each resulting in obtaining a certain data distribution over the compute nodes N0 to N6. In this case, said obtaining the data distribution should not be construed as performing any physical or real distribution of the data items over the compute nodes. Instead, said obtaining the data distribution just relates to a way of describing the data items in a proper manner. More specifically, the first substep of the step S1404 yields the so-called per-node data distribution at which each of the data items D0 to D6 of the data array received in the step S1402 is assigned to respective one of the compute nodes N0 to N6. The second subset of the step S1404 yields the so-called permutation-based data distribution at which the per-node data distribution is modified by using the cyclic permutations.

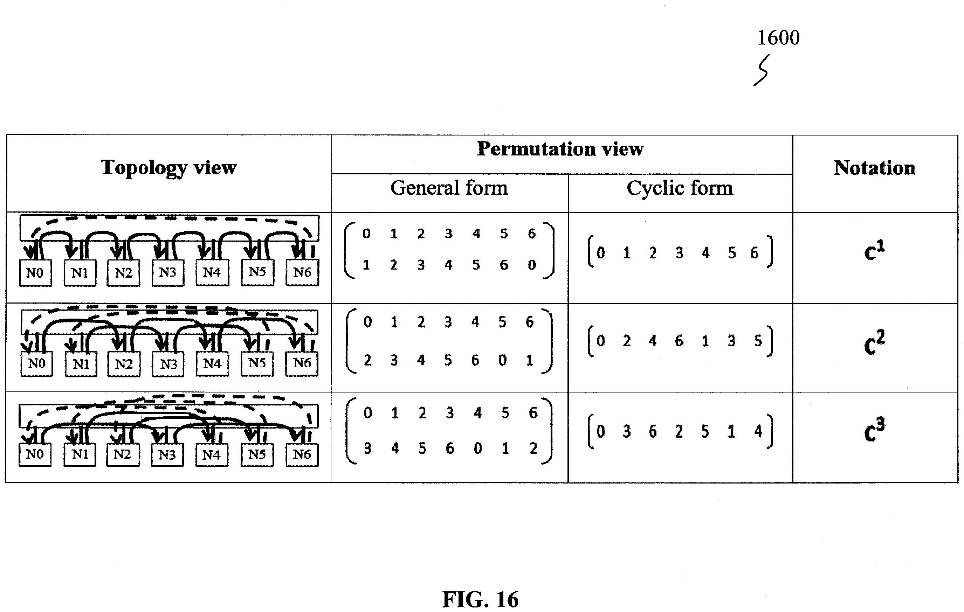

Each cyclic permutation literally describes a certain logical ring. Some examples of cyclic permutations are given in Fig. 16. In particular, Fig. 16 shows a table 1600 for three different cyclic permutations denoted, respectively, as $c^1$, $c^2$, and $c^3$, with the superscript representing a permutation power. For example, $c^1$ means that the permutation power is equal to 1, thereby meaning that the compute node N0 performs the point-to-point communication with the compute node N1, the compute node N1, in turn, performs the point-to-point communication with the compute node N2, ..., and the compute node N6 performs the point-to-point communication with the compute node N0. The table 1600 shows a topology view representing the logical ring itself, as well as the detailed permutation view for each of the cyclic permutations $c^1$, $c^2$, and $c^3$. The permutation view may in turn be presented in two forms: general form and cyclic form. Thus, the cyclic permutation defines the point-to-point communication for each compute node, i.e. it indicates to each compute node which one of other compute nodes should be a recipient of its data. It should also be noted that each cyclic permutation forms a closed cyclic group, which means that its combinations with itself can give all possible complement cycles - for example, $c^3$ denotes a combination $c^1 \times c^1 \times c^1$, or it can be obtained by $c^2 \times c^1$.

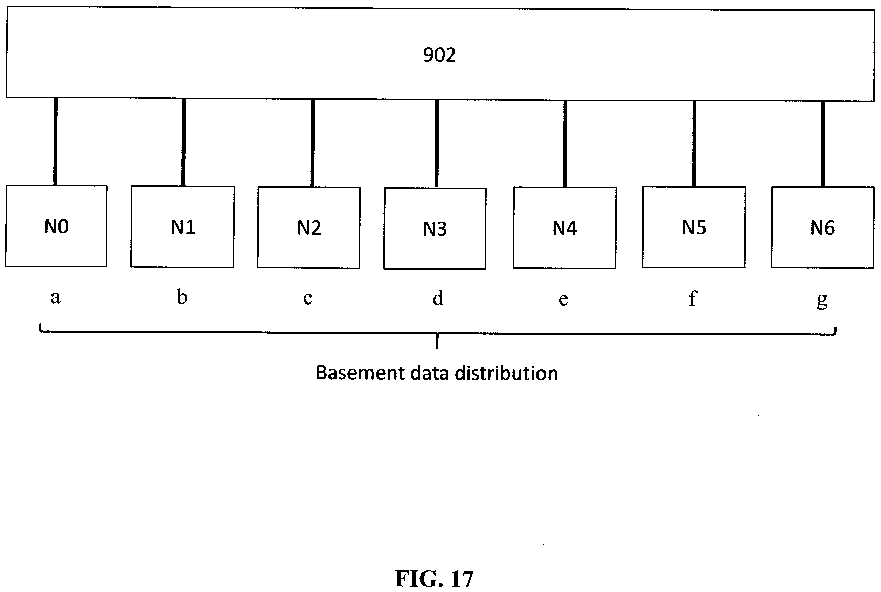

Turning back to Fig. 15, the permutation-based data distribution is obtained in the second substep of the step S1404 by dividing each of the data items D0 to D6 into P elementary chunks and applying the cyclic permutations to the chunks of the compute nodes N0 to N6. In the example shown in Fig. 15, there are 7 elementary chunks "a, b, c, d, e, f, g" in each compute node after said division. It should be noted that the similarly-named chunks assigned to different compute nodes are not necessarily identical. To apply the cyclic permutations to the chunks of the compute nodes N0 to N6, it is first necessary to fix a basement data distribution comprising one differently-named chunk from each compute node. One example is shown in Fig. 17 where the basement data distribution comprises the chunk "a" from the compute node N0, the chunk "b" from the compute node N1, the chunk "c" from the compute node N2, ..., and the chunk "g" from the compute node N6. By combining the basement data distribution with different cyclic permutations like those shown in Fig. 16, it is possible to present the initial data array in the form of the permutation-based data distribution shown in Fig. 15. For example, $c^1d_1$ simply means the following: the chunk "a" from the compute node N1, the chunk "b" from the compute node N2, the chunk "c" from the compute node N3, ..., and the chunk "g" from the compute node N0. As a result of the step S1304, the initial data array may be presented as the following cyclic groups: $c^0d_0$, $c^1d_1$, $c^2d_2$, $c^3d_3$, $c^4d_4$, $c^5d_5$, $c^6d_6$, where each of $d_0$, $d_1$, $d_2$, $d_3$, $d_4$, $d_5$, $d_6$ represents a set of chunks in respective one of the compute nodes N0 to N6 after said cyclic permutations.

Further, in the step S1408 of the method 1400, the schedule determined by the processor 1304 may define a certain set of point-to-point communications for said cyclic groups depending on the collective communication operation of interest. In the meantime, the point-to-point communications for said cyclic groups are also performed by using the cyclic permutations discussed above. One example of such point-to-point communication is given below:

- Assume that initial cyclic groups look as follows: $c^0d_0$ : $c^1d_1$: $c^2d_2$ : $c^3d_3$ : $c^4d_4$: $c^5d_5$ : : $c^6d_6$ (here the sign ":" denotes concatenation).
- Assume that the point-to-point communication consists in applying the cyclic permutation $c^4$ to the cyclic group $c^3d_3$, which is mathematically expressed as $c^4c^3d_3 = c^0d_3$.
- After the point-to-point communication, there should be the following: $c^0(d_0 + ds)$ : : $c^1d_1$ : $c^2d_2$ : $c^4d_4$ : $c^5d_5$ : $c^6d_6$.

Thus, after the point-to-point communication, the chunk "a" goes from the compute node N3 to the compute node N0, the chunk "b" goes from the compute node N4 to the compute node N1, the chunk "c" goes from the compute node N5 to the compute node N2, and so on. At the end, there will be two sets $d_0$ and $d_3$ with the same permutation, which means that their chunks are arranged in the same way and can therefore be accumulated as discussed above, namely: $a_0 + a_3 = a_{03}$, $b_0 + b_3 = b_{03}$,..., $g_0 + g_3 = g_{03}$.

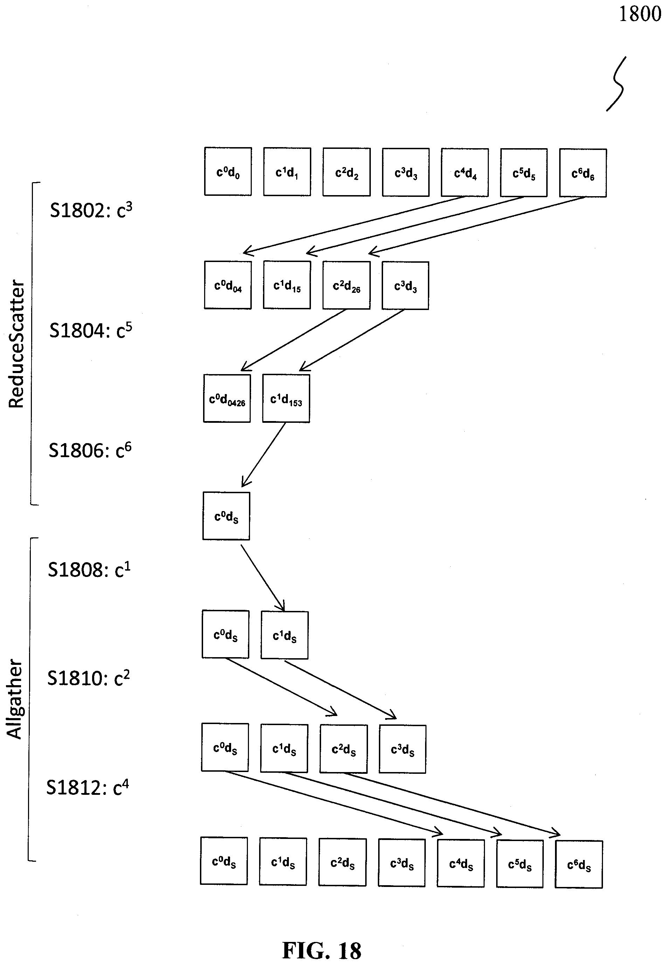

Referring to Fig. 18, a schedule 1800 for the Allreduce operation will be now described as applied to the above-discussed cyclic groups $c^0d_0$, $c^1d_1$, $c^2d_2$, $c^3d_3$, $c^4d_4$, $c^5d_5$, $c^6d_6$ assigned to the compute nodes N0 to N6. In this case, the schedule 1800 is arranged as a flowchart in order to provide the better understanding thereof. In particular, the Allreduce operation is presented in the schedule 1800 as the combination of the ReduceScatter operation and the Allgather operation, and the point-to-point communications of the cyclic groups are performed by using the cyclic permutations too. To make it easier to perceive the point-to-point communications of the cyclic groups, one may abstract from the fact that the cyclic group $c^xd_y$ denotes some assigned set of chunks and work with it as if it is a monolith data item. All the cyclic groups are combined together during the ReduceScatter operation, while the Allgather operation is used to distribute the combination result to all the compute nodes. The schedule 1800 provides the bandwidth-optimized implementation of the Allreduce operation for any number of the compute nodes.

More specifically, the ReduceScatter operation consists of three steps S1802 to S1806. Each step of the schedule 1800 involves using a certain cyclic permutation. In other words, the terms "step" and "cyclic permutation" may be used interchangeably in context of the schedule. In the step S1802, the total number of the cyclic groups or compute nodes is reduced to the nearest power of two. Since there are 7 cyclic groups in Fig. 18, the step S1802 requires reducing by 3 (for example, last) cyclic groups. This reduction may be performed by using the cyclic permutation $c^3$. After that, successive steps S1804 and S1806 each reduces the number of the cyclic groups twice by using the cyclic permutations $c^5$ and $c^6$, respectively, until a single cyclic group is left. The minimal possible number of the steps constituting the ReduceScatter operation is obviously equal to $\lceil \log P \rceil$.

As for the Allgather operation, it consists of three steps S1808 to S1812. At the beginning of the Allgather operation, there is only one cyclic group, and in each of steps S1808 and S1810, the number of the cyclic groups is doubled by using the cyclic permutations $c^1$ and $c^2$, respectively. As for the last step S1812, the number of the cyclic groups to be obtained is determined by the actual number of the compute nodes, and the step S1812 itself is therefore performed by using the cyclic permutation $c^4$ in the schedule 1800.

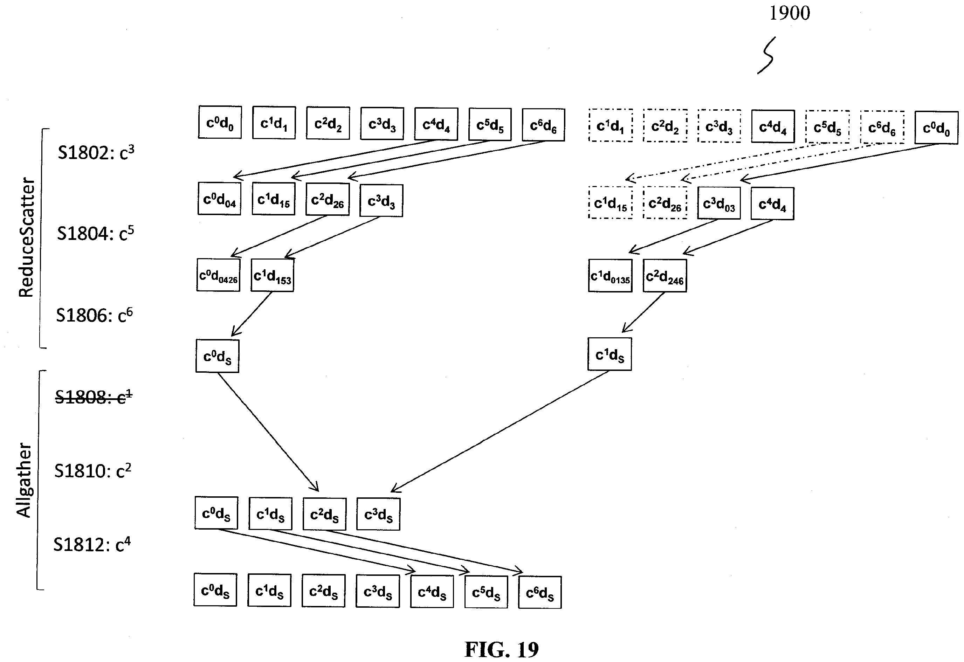

Fig. 19 shows one other embodiment, in which a schedule 1900 comprises the same steps as the schedule 1800 but relies on using two distributions of the cyclic groups simultaneously during the ReduceScatter operation. The second distribution of the cyclic groups is the same but all indices are shifted by 1. It should be noted that the use of the second distribution of the cyclic groups would not lead to doubling the computing work since some of the cyclic groups may be shared between the two distributions (these cyclic groups are colored in grey in the schedule 1900). At the same time, the use of the two distributions will definitely lead to some additional cyclic groups to be stored and communicated, but it also provides an advantage - in this case, the number of the steps or, in other words, point-to-point communications involved in the Allreduce operation is reduced (in particular, the step S1808 is eliminated, as symbolically shown by a strikethrough line in the schedule1900).

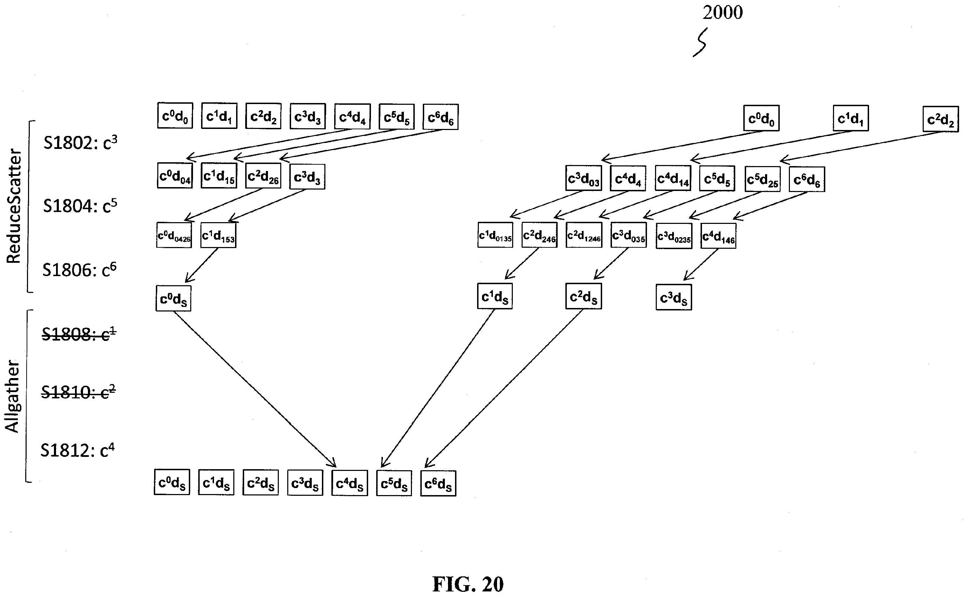

One more embodiment involves reducing the number of the steps S1802 to S1812 or the cyclic permutations characterizing the Allreduce operation by 2, as shown in Fig. 20. In particular, it is the steps S1808 and S1810 in a schedule 2000, which are excluded from the Allreduce operation in this embodiment. To do this, it is necessary to have 4 cyclic groups characterized by the cyclic permutations $c^0$, $c^1$, $c^2$, $c^3$ after the ReduceScatter operation. The steps to be eliminated are again shown in the schedule 2000 by using the strikethrough lines.

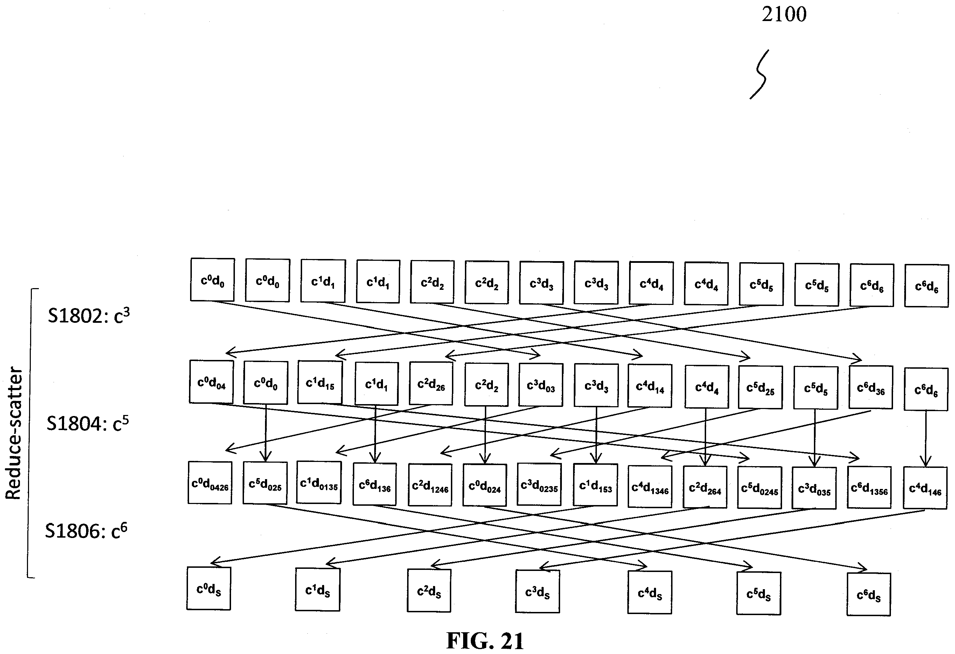

Finally, one more embodiment is feasible, in which the number of the steps characterizing the Allreduce operation is reduced to $\lceil \log P \rceil$. This embodiment is schematically shown in Fig. 21 as a schedule 2100, and provides the latency-optimized implementation of the Allreduce operation. In particular, it follows from the schedule 2100 that the Allreduce operation may finish in the steps S1802 to S1806 in case of the compute nodes N0 to N6, thereby excluding the Allgather operation at all. This latency-optimized implementation of the Allreduce operation may be applied to any number of the compute nodes, and in particular, for the power-of-two number of the compute node, it will be similar to the recursive halving algorithm.

Given the embodiments shown in Figs. 18-21, one can conclude that the schedule for the Allreduce operation may define any number of the steps or cyclic permutations between $\lceil \log P \rceil$ and $2\lceil \log P \rceil$. Tables 1 and 2 provided below demonstrate complexity comparisons between the prior art algorithms and the method 1400 in case of bandwidth-optimized and latency-optimized implementations, respectively. In this case, the complexities are given in time units.

Table 1. Complexity comparison of bandwidth-optimized methods for the Allreduce operation.

| Ring | Recursive Halving | Method 1400 |
|---|---|---|
| $2\left((P-1)\cdot a + \dfrac{(P-1)}{P}\cdot bD\right)$ | $2\left((logPr+1)\cdot a + \left(\dfrac{(Pr-1)}{Pr}+1\right)\right.$ $\left. \cdot bD\right)$ | $2(\lceil \log P\rceil \cdot a + \dfrac{(P-1)}{P}\cdot$ $\cdot bD)$ |

Table 2. Complexity comparison of the latency-optimized methods for the Allreduce operation.

| Recursive Doubling | Method 1400 |
|---|---|
| $(\lfloor \log Pr \rfloor + 2) \cdot (a + bD)$ | $\lceil \log P \rceil \cdot a + (2 \log P - 2) \cdot bD$ |

To understand what number of the cyclic permutations for the Allreduce operation will be optimal in terms of both the bandwidth and the latency, one may calculate a latency-to-bandwidth ratio as follows:

$$\omega = \frac{a}{b \cdot D},$$

where D is the size of the data array received in the step S 1402 of the method 1400. This ratio can vary not only for different networks but also for different sizes of the data array. It is possible to calculate the optimal number of the cyclic permutations used in the schedule for the Allreduce operation based on this ratio.

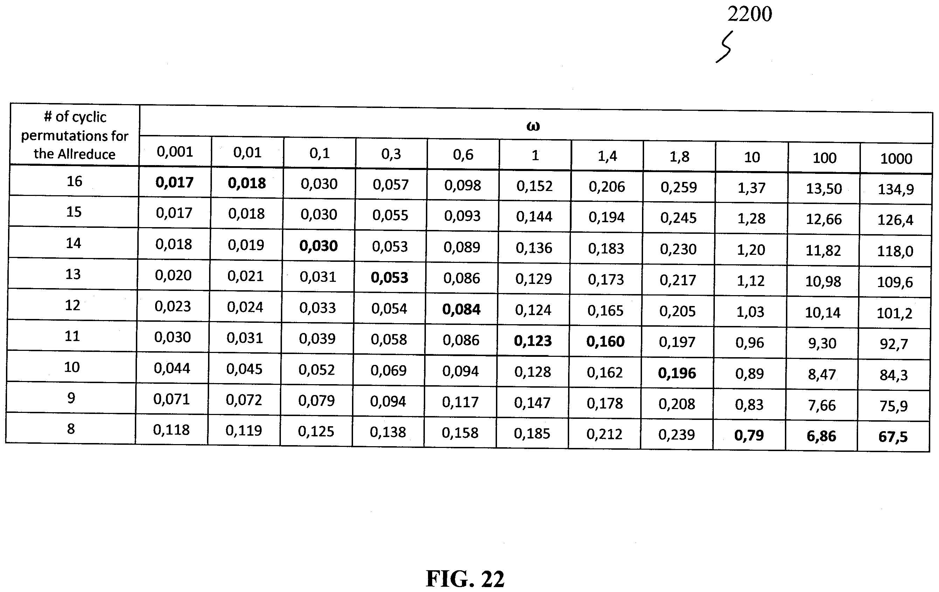

Fig. 22 represents a table 2200 listing different time estimations $\omega$ for a different number of the cyclic permutations used in the schedule for the Allreduce operation. The table 2200 has been drafted for the number of the compute nodes P = 255. The best-estimated performance for each number of the cyclic permutations is shown in bold type. In case of the smallest value of the latency-to-bandwidth ratio, i.e. when the bandwidth term dominates over the latency term, the bandwidth-optimized embodiment discussed above with reference to Fig. 18 and involving 16 cyclic permutations works well. In case of the biggest value of the latency-to-bandwidth ratio, i.e. when the latency term dominates over the bandwidth term, the latency-optimized embodiment discussed above with reference to Fig. 21 and involving 8 cyclic permutations shows the best performance. As for the intermediate values of the latency-to-bandwidth ratio, the best performance for the Allreduce operation is provided by using some intermediate number of the cyclic permutations.

The optimal number of the cyclic permutations to be used in the schedule for the Allreduce operation depends on the number of the computer nodes and may be estimated from the following formula:

$$n_{optimal} = \log \left\lceil \frac{P \cdot (2 \log P - 3) \cdot \ln 2}{\omega} \right\rceil.$$

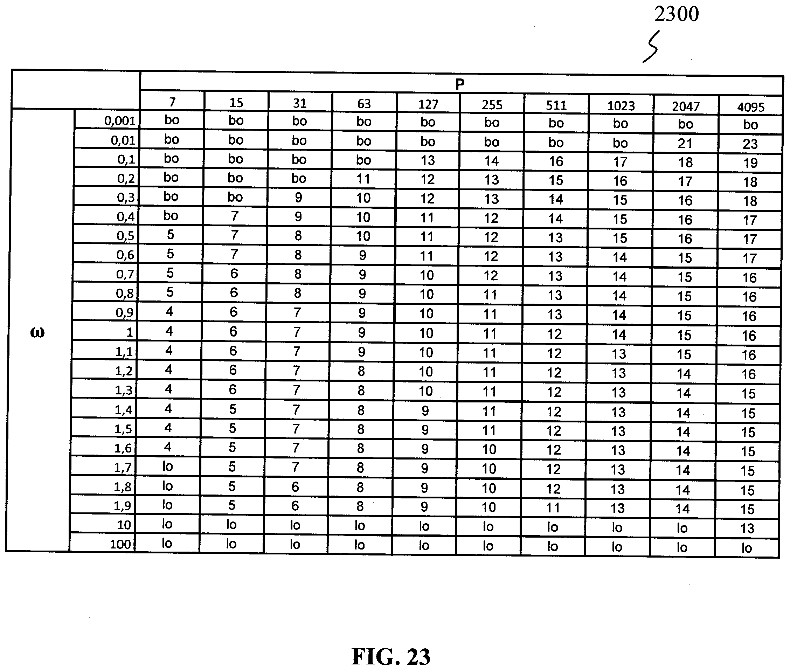

In particular, Fig. 23 shows a table 2300 listing different optimal numbers $n_{optimal}$ of the cyclic permutations, which are calculated for different latency-to-bandwidth ratios $\omega$ and different numbers P of the compute nodes. In the table 2300, "$l_0$" and "$b_0$" correspond to the values of $n_{optimal}$, which are optimal in the latency and bandwidth, respectively.

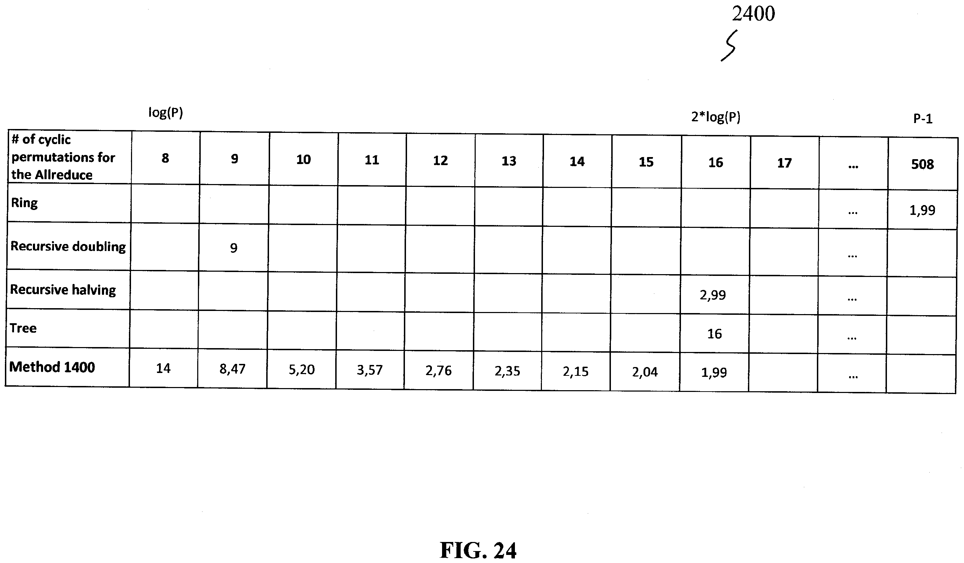

Fig. 24 represents a table 2400, which demonstrates the comparison of the above-described prior art algorithms and the method 1400 for the Allreduce operation. In particular, the prior art algorithms and the method 1400 have been compared by the number of the cyclic permutations and the size of the data items to be sent by each compute for the fixed number of the compute nodes P = 255. The size of each data item to be sent is divided by the total size of the data array in order to have a normalized value for comparison. The table 2400 highlights the main difference of the method 1400 - its ability to perform the Allreduce operation in any number of the cyclic permutations between $\lceil \log P \rceil$ and

$2\lceil \log P \rceil$. By varying the number of the cyclic permutations, it is possible to find the best combination of the total size of the data array to be sent and the latency overhead. In case of the non-power-of-two number of the compute nodes, the method 1400 shows better asymptotic performance than any of the prior art algorithms. In case of the power-of-two number of the compute nodes, the performance of the latency-optimized embodiment of the method 1400 is equal to that of the recursive doubling algorithm. At the same time, the bandwidth-optimized embodiment of the method 1400 exhibits the performance as the recursive halving algorithm. As for any intermediate number of the cyclic permutations,

i.e. between $\lceil \log P \rceil$ and $2\lceil \log P \rceil$, the performance of the method 1400 exceeds that of any of the prior art algorithms.

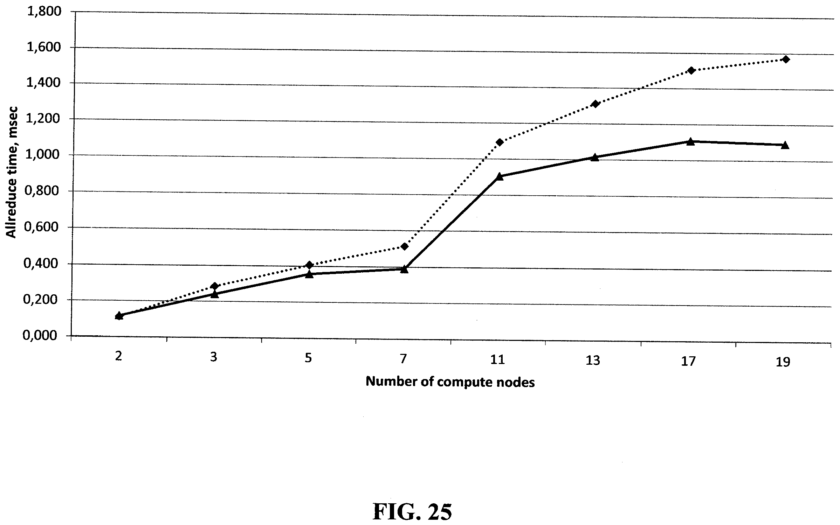

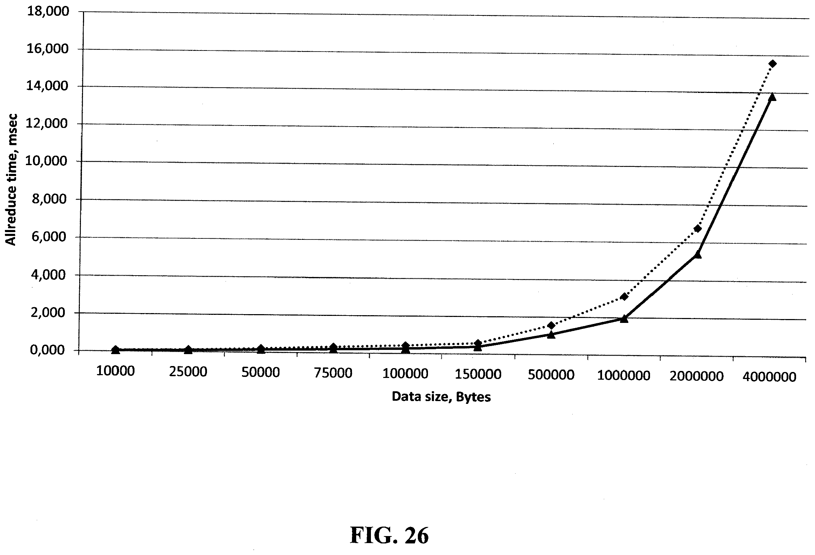

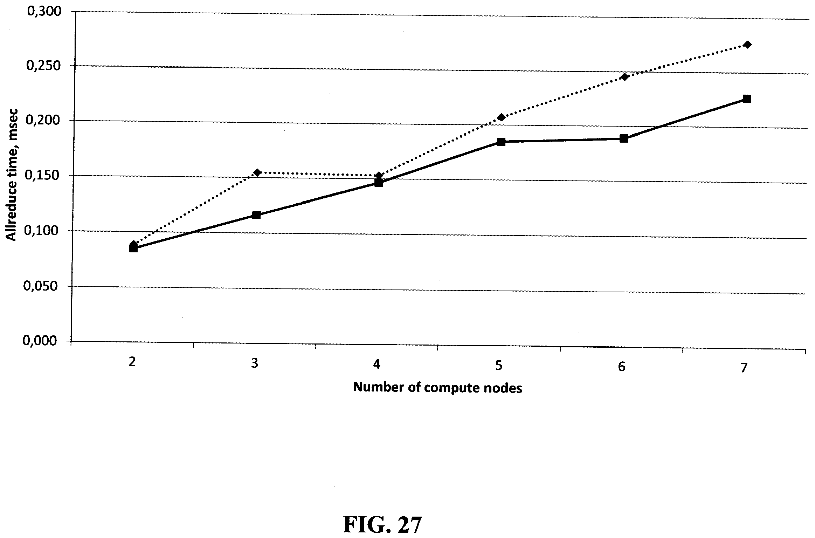

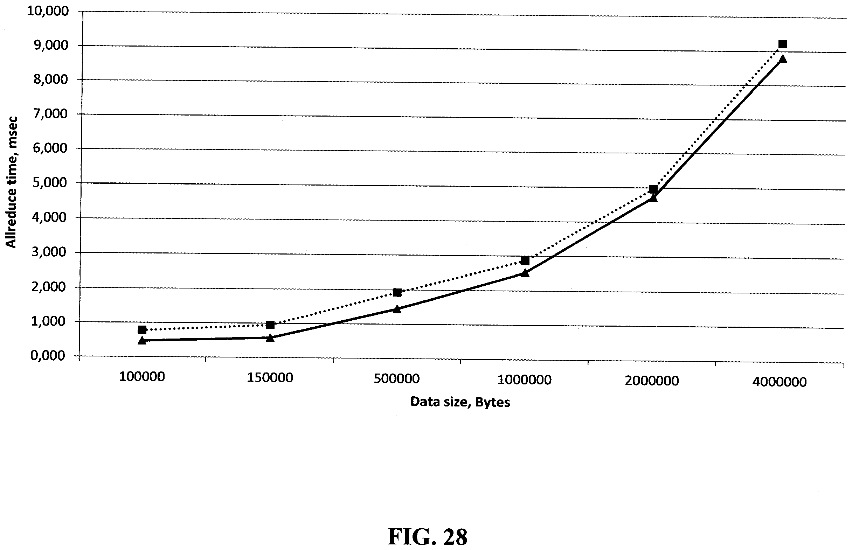

The method 1400 has been experimentally compared to the OpenMPI standard described in the following information source: Edgar Gabriel, et al., Open MPI: Goals, Concept, and Design of a Next Generation MPI Implementation, In Proceedings, 11th European PVM/MPI Users' Group Meeting, pages 97-104, Budapest, Hungary, September 2004. As noted above, the OpenMPI standard two main algorithms for the Allreduce operation: the recursive doubling algorithm for small data items, and the ring algorithm for big data items. The experiments on real hardware have been performed for two different networking mediums: inter-process communication in Linux OS (see Figs. 25 and 26) and 10 Gigabit Ethernet (see Figs. 27 and 28). To provide honest comparison, the method 1400 has been implemented based on the OpenMPI internal point-to-point communicator. The same communicator is used by OpenMPI collective operations. The experimental results are shown in the form of different dependencies in Figs. 25 and 26 for the inter-process communication in Linux OS and in Figs. 27 and 28 for the 10 Gigabit Ethernet. It should be noted that the experimental dependencies represented by the solid lines are obtained by the method 1400, while those represented by the dashed lines are obtained by using the OpenMPI standard.

More specifically, Fig. 25 shows two dependencies of the execution time of the Allreduce operation on the number of the compute nodes involved therein. As follows from Fig. 25, the execution time of the Allreduce operation increases as the number of the compute nodes becomes bigger, and this increase is faster for the upper dependency than for the bottom dependency, thereby confirming the better performance of the method 1400 compared to the OpenMPI standard.

Relative to Fig. 26, it shows two dependencies of the execution time of the Allreduce operation on the size of the data array for the fixed number of the compute nodes P = 255. As can be seen from Fig. 26, the dependencies become diverging as the size of the data array increases. In case of the big data array, the OpenMPI standard switches to the ring algorithm for the Allreduce operation, thereby requiring a bigger number of the cyclic permutations. In the meantime, the growth of the bottom dependency is smaller, thereby meaning the method 1400 requires a smaller number of the cyclic permutations and, therefore, a smaller execution time for the Allreduce operation.

As for Fig. 27, it shows the same dependencies as in Fig. 25, but for the maximum number of the compute nodes P = 7 because it is not easy to find a big peer-to-peer network in case of the 10 Gigabit Ethernet. Nonetheless, Fig. 27 shows the same character of the growth of the dependencies as the number of the compute nodes increases - the more compute nodes, the bigger growth. Again, the performance of the method 1400 is better than that of the OpenMPI standard.

Finally, Fig. 28 shows the same dependencies as in Fig. 26, i.e. the comparison of the OpenMPI standard and the method 1400 at different sizes of the data array to be used in the Allreduce operation. The dependencies of Fig. 28 show that an absolute benefit value does not depend on the size of the data array. In other words, the benefit value in case of the big data array is determined merely by the difference in the number of the steps required for performing the Allreduce operation in accordance with the OpenMPI standard (i.e. P - 1 steps) and the method 1400 (i.e. $2logP$ steps), and is independent of the size of the data array.

Those skilled in the art should understand that each block or step of the method 1400, or any combinations of the blocks or steps, can be implemented by various means, such as hardware, firmware, and/or software. As an example, one or more of the blocks or steps described above can be embodied by computer executable instructions, data structures, program modules, and other suitable data representations. Furthermore, the computer executable instructions which embody the blocks or steps described above can be stored on a corresponding data carrier and executed by at least one processor like the processor 1304 of the apparatus 1300. This data carrier can be implemented as any computer-readable storage medium configured to be readable by said at least one processor to execute the computer executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the exemplary embodiments of the present disclosure are described herein, it should be noted that any various changes and modifications could be made in the embodiments of the present disclosure, without departing from the scope of legal protection which is defined by the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

**Claims**

1.  A method for performing a collective communication operation in a data communications network comprising multiple compute nodes, the method comprising:

    - receiving (S1402) a data array to be used in the collective communication operation, the data array comprising data items and having a predefined size;
    - obtaining (S1404) a distribution of the data items over the compute nodes;

- obtaining (S1406) network parameters of the data communications network;
- determining (S1408) a schedule for the collective communication operation based on the size of the data array, the network parameters, and the distribution of the data items; and
- performing (S1410) the collective communication operation on the data array in accordance with the schedule for the collective communication operation,

wherein both the distribution of the data items and the schedule for the collective communication operation are based on cyclic permutations of the data items among the compute nodes; and

**characterised in that** obtaining (S1404) the distribution of the data items over the compute nodes comprises:

obtaining a per-compute node distribution of the data items; and
obtaining the distribution of data items by dividing each of the data items of the per-compute node distribution of the data items into elementary chunks and applying the cyclic permutations to the elementary chunks.

2. The method of claim 1, wherein the network parameters comprise a network bandwidth and a network latency.

3. The method of claim 1 or 2, wherein the data communications network is a peer-to-peer network.

4. The method of any one of claims 1 to 3, wherein said obtaining (S1406) the network parameters of the data communications network comprises:

- receiving a user input comprising the network parameters,
- calculating the network parameters in real time by using a network analyzer, or
- retrieving the network parameters from a memory in which the network parameters are stored in advance.

5. The method of any one of claims 1 to 4, wherein the collective communication operation comprises an Allreduce operation.

6. The method of claim 5, wherein the Allreduce operation comprises a combination of a ReduceScatter operation and an Allgather operation.

7. The method of claim 5 or 6, wherein the number of the cyclic permutations used in the schedule for the Allreduce operation varies from $\lceil \log P \rceil$ to $2 \lceil \log P \rceil$, where P is the number of the compute nodes.

8. An apparatus (1300) for performing a collective communication operation in a data communications network comprising multiple compute nodes, the apparatus comprising:

at least one processor (1304), and
a memory (1302) coupled to the at least one processor (1304) and storing computer executable instructions (1306) which, when executed by the at least one processor (1304), cause the at least one processor (1304) to:

- receive a data array to be used in the collective communication operation, the data array comprising data items and having a predefined size;
- obtain a distribution of the data items over the compute nodes;
- obtain network parameters of the data communications network;
- determine a schedule for the collective communication operation based on the size of the data array, the network parameters, and the distribution of the data items; and
- perform the collective communication operation on the data array in accordance with the schedule for the collective communication operation,

wherein both the distribution of the data items and the schedule for the collective communication operation are based on cyclic permutations of the data items among the compute nodes; and

**characterised in that** obtaining the distribution of the data items over the compute nodes comprises:

obtaining a per-compute node distribution of the data items; and
obtaining the distribution of data items by dividing each of the data items of the per-compute node distribution of the data items into elementary chunks and applying the cyclic permutations to the elementary chunks.

9. The apparatus of claim 8, wherein the network parameters comprise a network bandwidth and a network latency.

10. The apparatus of claim 8 or 9, wherein the data communications network is a peer-to-peer network.

11. The apparatus of any one of claims 8 to 10, wherein the at least one processor (1304) is configured to obtain the network parameters of the data communications network by:

- receiving a user input comprising the network parameters,
- receiving the network parameters from a network analyzer performing real time calculations of the network parameters, or
- retrieving the network parameters from the memory in which the network parameters are stored in advance.

12. The apparatus of any one of claims 8 to 11, wherein the collective communication operation comprises an Allreduce operation.

13. The apparatus of claim 12, wherein the Allreduce operation comprises a combination of a ReduceScatter operation and an Allgather operation.

14. The apparatus of claim 12 or 13, wherein the number of the cyclic permutations used in the schedule for the Allreduce operation varies from $\lceil \log P \rceil$ to $2 \lceil \log P \rceil$, where P is the number of the compute nodes.

15. A computer program product comprising a computer readable storage medium, wherein the storage medium stores computer executable instructions which, when executed by at least one processor, cause the at least one processor to perform the method of any of claims 1 to 7.

**Patentansprüche**

1. Verfahren zum Durchführen einer gemeinsamen Kommunikationsoperation in einem mehrere Rechenknoten umfassenden Kommunikationsnetzwerk, wobei das Verfahren Folgendes umfasst:

- Empfangen (S1402) eines Datenfeldes, das bei der gemeinsamen Kommunikationsoperation zu verwenden ist, wobei das Datenfeld Datenelemente umfasst und eine vordefinierte Größe aufweist;
- Erhalten (S1404) einer Verteilung der Datenelemente auf die Rechenknoten;
- Erhalten (S1406) von Netzwerkparametern des Datenkommunikationsnetzwerks;
- Bestimmen (S1408) eines Zeitplans für die gemeinsame Kommunikationsoperation basierend auf der Größe des Datenfeldes, den Netzwerkparametern und der Verteilung der Datenelemente; und
- Durchführen (S1410) der gemeinsamen Kommunikationsoperation auf dem Datenfeld gemäß dem Zeitplan für die gemeinsame Kommunikationsoperation, wobei sowohl die Verteilung der Datenelemente als auch der Zeitplan für die gemeinsame Kommunikationsoperation auf zyklischen Permutationen der Datenelemente unter den Rechenknoten basieren; und

**dadurch gekennzeichnet, dass** das Erhalten (S1404) der Verteilung der Datenelemente auf die Rechenknoten Folgendes umfasst:

Erhalten einer Verteilung der Datenelemente pro Rechenknoten; und
Erhalten der Verteilung von Datenelementen durch Unterteilen jedes der Datenelemente der Verteilung der Datenelemente pro Rechenknoten in elementare Teilstücke und Anwenden der zyklischen Permutationen auf die elementaren Teilstücke.

2. Verfahren gemäß Anspruch 1, wobei die Netzwerkparameter eine Netzwerkbandbreite und eine Netzwerklatenz umfassen.

3. Verfahren gemäß Anspruch 1 oder 2, wobei das Datenkommunikationsnetzwerk ein "Peer-to-Peer"-Netzwerk ist.

4. Verfahren gemäß einem der Ansprüche 1 bis 3, wobei das Erhalten (S1406) der Netzwerkparameter des Kommunikationsnetzwerks Folgendes umfasst:

- Empfangen einer Benutzereingabe, die die Netzwerkparameter umfasst,
- Berechnen der Netzwerkparameter in Echtzeit durch Verwendung eines Netzwerkanalysators, oder
- Abrufen der Netzwerkparameter aus einem Speicher, in dem die Netzwerkparameter im Voraus gespeichert sind.

**5.** Verfahren gemäß einem der Ansprüche 1 bis 4, wobei die gemeinsame Kommunikationsoperation eine "Allreduce"-Operation umfasst.

**6.** Verfahren gemäß Anspruch 5, wobei die "Allreduce"-Operation eine Kombination aus einer "ReduceScatter"-Operation und einer "Allgather"-Operation umfasst.

**7.** Verfahren gemäß Anspruch 5 oder 6, wobei die Anzahl der zyklischen Permutationen, die in dem Zeitplan für die "Allreduce"-Operation verwendet werden, von $\lceil \log P \rceil$ bis $2\lceil \log P \rceil$ variiert, wobei $P$ die Anzahl der Rechenknoten ist.

**8.** Vorrichtung (1300) zum Durchführen einer gemeinsamen Kommunikationsoperation in einem mehrere Rechenknoten umfassenden Kommunikationsnetzwerk, wobei das Verfahren Folgendes umfasst:

mindestens einen Prozessor (1304), und
einen Speicher (1302), der mit dem mindestens einen Prozessor (1304) gekoppelt ist und computerausführbare Anweisungen (1306) speichert, die beim Ausführen durch den mindestens einen Prozessor (1304) den mindestens einen Prozessor (1304) dazu veranlassen:

- ein Datenfeld zu empfangen, das bei der gemeinsamen Kommunikationsoperation zu verwenden ist, wobei das Datenfeld Datenelemente umfasst und eine vordefinierte Größe aufweist;
- eine Verteilung der Datenelemente auf die Rechenknoten zu erhalten;
- Netzwerkparameter des Datenkommunikationsnetzwerks zu erhalten;
- einen Zeitplan für die gemeinsame Kommunikationsoperation basierend auf der Größe des Datenfeldes, den Netzwerkparametern und der Verteilung der Datenelemente zu bestimmen; und
- die gemeinsame Kommunikationsoperation auf dem Datenfeld gemäß dem Zeitplan für die gemeinsame Kommunikationsoperation durchzuführen,

wobei sowohl die Verteilung der Datenelemente als auch der Zeitplan für die gemeinsame Kommunikationsoperation auf zyklischen Permutationen der Datenelemente unter den Rechenknoten basieren; und
**dadurch gekennzeichnet, dass** das Erhalten der Verteilung der Datenelemente auf die Rechenknoten Folgendes umfasst:

Erhalten einer Verteilung der Datenelemente pro Rechenknoten; und
Erhalten der Verteilung von Datenelementen durch Unterteilen jedes der Datenelemente der Verteilung der Datenelemente pro Rechenknoten in elementare Teilstücke und Anwenden der zyklischen Permutationen auf die elementaren Teilstücke.

**9.** Vorrichtung gemäß Anspruch 8, wobei die Netzwerkparameter eine Netzwerkbandbreite und eine Netzwerklatenz umfassen.

**10.** Vorrichtung gemäß Anspruch 8 oder 9, wobei das Datenkommunikationsnetzwerk ein "Peer-to-Peer"-Netzwerk ist.

**11.** Vorrichtung gemäß einem der Ansprüche 8 bis 10, wobei der mindestens eine Prozessor (1304) dazu ausgelegt ist, die Netzwerkparameter des Datenkommunikationsnetzwerks durch Folgendes zu erhalten:

- Empfangen einer Benutzereingabe, die die Netzwerkparameter umfasst,
- Empfangen der Netzwerkparameter aus einem Netzwerkanalysator, der Echtzeitberechnungen der Netzwerkparameter durchführt, oder
- Abrufen der Netzwerkparameter aus dem Speicher, in dem die Netzwerkparameter im Voraus gespeichert sind.

**12.** Vorrichtung gemäß einem der Ansprüche 8 bis 11, wobei die gemeinsame Kommunikationsoperation eine "Allreduce"-Operation umfasst.

**13.** Vorrichtung gemäß Anspruch 12, wobei die "Allreduce"-Operation eine Kombination aus einer "ReduceScatter"-Operation und einer "Allgather"-Operation umfasst.

**14.** Vorrichtung gemäß Anspruch 12 oder 13, wobei die Anzahl der zyklischen Permutationen, die in dem Zeitplan für die "Allreduce"-Operation verwendet werden, von $\lceil \log P \rceil$ bis $2\lceil \log P \rceil$ variiert, wobei $P$ die Anzahl der Rechenknoten ist.

**15.** Computerprogrammprodukt, umfassend ein computerlesbares Speichermedium, wobei das Speichermedium computerausführbare Anweisungen speichert, die beim Ausführen durch mindestens einen Prozessor den mindestens einen Prozessor veranlassen, das Verfahren gemäß einem der Ansprüche 1 bis 7 durchzuführen.

**Revendications**

**1.** Procédé de réalisation d'une opération de communication collective dans un réseau de communication de données comportant de multiples noeuds de calcul, le procédé comportant les étapes consistant à :

- recevoir (S1402) un tableau de données à utiliser dans l'opération de communication collective, le tableau de données comportant des éléments de données et présentant une taille prédéfinie ;
- obtenir (S1404) une répartition des éléments de données sur les noeuds de calcul ;
- obtenir (S1406) des paramètres de réseau du réseau de communication de données ;
- déterminer (S1408) un planning pour l'opération de communication collective d'après la taille du tableau de données, les paramètres de réseau et la répartition des éléments de données ; et
- effectuer (S1410) l'opération de communication collective sur le tableau de données conformément au planning pour l'opération de communication collective,
la répartition des éléments de données et le planning pour l'opération de communication collective étant tous deux basés sur des permutations cycliques des éléments de données entre les noeuds de calcul ; et **caractérisé en ce que** l'obtention (S1404) de la répartition des éléments de données sur les noeuds de calcul comporte :

l'obtention d'une répartition des éléments de données par noeud de calcul ; et
l'obtention de la répartition d'éléments de données en divisant chacun des éléments de données de la répartition des éléments de données par noeud de calcul en fragments élémentaires et en appliquant les permutations cycliques aux fragments élémentaires.

**2.** Procédé selon la revendication 1, les paramètres de réseau comportant une bande passante de réseau et une latence de réseau.

**3.** Procédé selon la revendication 1 ou 2, le réseau de communication de données étant un réseau poste à poste.

**4.** Procédé selon l'une quelconque des revendications 1 à 3, ladite obtention (S1406) des paramètres de réseau du réseau de communication de données comportant :

- la réception d'une entrée d'utilisateur comportant les paramètres de réseau,
- le calcul des paramètres de réseau en temps réel en utilisant un analyseur de réseau, ou
- l'extraction des paramètres de réseau d'une mémoire dans laquelle les paramètres de réseau sont stockés à l'avance.

**5.** Procédé selon l'une quelconque des revendications 1 à 4, l'opération de communication collective comportant une opération Allreduce.

**6.** Procédé selon la revendication 5, l'opération Allreduce comportant une combinaison d'une opération ReduceScatter et d'une opération Allgather.

7. Procédé selon la revendication 5 ou 6, le nombre des permutations cycliques utilisées dans le planning pour l'opération Allreduce variant de [log P] à 2[log P], où P est le nombre des noeuds de calcul.

8. Appareil (1300) de réalisation d'une opération de communication collective dans un réseau de communication de données comportant de multiples noeuds de calcul, l'appareil comportant :

   au moins un processeur (1304), et
   une mémoire (1302) couplée au(x) processeur(s) (1304) et stockant des instructions (1306) exécutables par ordinateur qui, lorsqu'elles sont exécutées par le ou les processeurs (1304), amènent le ou les processeurs (1304) à :

   - recevoir un tableau de données à utiliser dans l'opération de communication collective, le tableau de données comportant des éléments de données et présentant une taille prédéfinie ;
   - obtenir une répartition des éléments de données sur les noeuds de calcul ;
   - obtenir des paramètres de réseau du réseau de communication de données,
   - déterminer un planning pour l'opération de communication collective d'après la taille du tableau de données, les paramètres de réseau et la répartition des éléments de données ; et
   - effectuer l'opération de communication collective sur le tableau de données conformément au planning pour l'opération de communication collective,

   la répartition des éléments de données et le planning pour l'opération de communication collective étant tous deux basés sur des permutations cycliques des éléments de données entre les noeuds de calcul ; et **caractérisé en ce que** l'obtention de la répartition des éléments de données sur les noeuds de calcul comporte :

   l'obtention d'une répartition des éléments de données par noeud de calcul ; et
   l'obtention de la répartition d'éléments de données en divisant chacun des éléments de données de la répartition des éléments de données par noeud de calcul en fragments élémentaires et en appliquant les permutations cycliques aux fragments élémentaires.

9. Appareil selon la revendication 8, les paramètres de réseau comportant une bande passante de réseau et une latence de réseau.

10. Appareil selon la revendication 8 ou 9, le réseau de communication de données étant un réseau poste à poste.

11. Appareil selon l'une quelconque des revendications 8 à 10, le ou les processeurs (1304) étant configurés pour obtenir les paramètres de réseau du réseau de communication de données :

   - en recevant une entrée d'utilisateur comportant les paramètres de réseau,
   - en recevant les paramètres de réseau en provenance d'un analyseur de réseau effectuant des calculs en temps réel des paramètres de réseau, ou
   - en extrayant les paramètres de réseau de la mémoire dans laquelle les paramètres de réseau sont stockés à l'avance.

12. Appareil selon l'une quelconque des revendications 8 à 11, l'opération de communication collective comportant une opération Allreduce.

13. Appareil selon la revendication 12, l'opération Allreduce comportant une combinaison d'une opération ReduceScatter et d'une opération Allgather.

14. Appareil selon la revendication 12 ou 13, le nombre des permutations cycliques utilisées dans le planning pour l'opération Allreduce variant de [log P] à 2[log P], où P est le nombre des noeuds de calcul.

15. Produit de programme d'ordinateur comportant un support de stockage lisible par ordinateur, le support de stockage conservant des instructions exécutables par ordinateur qui, lorsqu'elles sont exécutées par au moins un processeur, amènent le ou les processeurs à réaliser le procédé selon l'une quelconque des revendications 1 à 7.

EP 3 877 863 B1

100

N0
D0

N1

N2

⋮

NP-1

N0
D0

N1
D0

N2
D0

⋮

NP-1
D0

**FIG. 1**

200

N0
D0

N1
D1

N2
D2

⋮

NP-1
DP-1

N0
$D012...P-1 = D\Sigma$

N1
D1

N2
D2

⋮

NP
DP-1

**FIG. 2**

**FIG. 3**

**FIG. 4**

EP 3 877 863 B1

**FIG. 5**

**FIG. 6**

706a ———◆━━━◆——————————————————————————
        ⌒702a

708a ——————◆━━━━━━━━━━━◆————————————————
  ←··→                        ⌒702b
  704a

710 ————————————◆━━━━━━━━━━━━━◆——————————
  ←·····→                          ⌒702c
   704b

708b ———————————————◆━━━━━━━━━━━━◆————————
  ←········→                           ⌒702d
     704c

706b ————————————————————————◆━━━━━━━━◆——
  ←·············→                          ⌒702e
       704d

**FIG. 7**

800

| Nodes | Initial | 0 (preparation) | | | | 1 | | | |
|---|---|---|---|---|---|---|---|---|---|
| | | snd | to | rcv | res | snd | to | rcv | res |
| N0 | D0 | D0 | | D1 | D01 | D01 | N2 | D23 | D0123 |
| N1 | D1 | D1 | N0 | | | | | | |
| N2 | D2 | D2 | | D3 | D23 | D23 | N0 | D01 | D0123 |
| N3 | D3 | D3 | N2 | | | | | | |
| N4 | D4 | D4 | | D5 | D45 | D45 | N6 | D6 | D456 |
| N5 | D5 | D5 | N4 | | | | | | |
| N6 | D6 | D6 | | | D6 | D6 | N4 | D45 | D456 |

| 2 | | | | 3 (finalization) | | | |
|---|---|---|---|---|---|---|---|
| snd | to | rcv | res | snd | to | rcv | res |
| D0123 | N4 | D456 | D0123456 | D0123456 | N1 | | **D0123456** |
| | | | | | | D0123456 | **D0123456** |
| D0123 | N6 | D456 | D0123456 | D0123456 | N3 | | **D0123456** |
| | | | | | | D0123456 | **D0123456** |
| D456 | N0 | D0123 | D0123456 | D0123456 | N5 | | **D0123456** |
| | | | | | | D0123456 | **D0123456** |
| D456 | N2 | D0123 | D0123456 | D0123456 | | | **D0123456** |

**FIG. 8**

EP 3 877 863 B1

900

902

N0    N1    N2    N3    N4    N5    N6

EP 3 877 863 B1

**FIG. 9**

1000

| Nodes | Initial | 0 | | | | 1 | | | | 2 | | | |
|---|---|---|---|---|---|---|---|---|---|---|---|---|---|
| | | snd | to | rcv | res | snd | to | rcv | res | snd | to | rcv | res |
| N0 | D0 | D0b | N6 | D1c | D01c | D01c | N6 | D12d | D012d | D012d | N6 | D123e | D0123e |
| N1 | D1 | D1c | N0 | D2d | D12d | D12d | N0 | D23e | D123e | D123e | N0 | D234f | D1234f |
| N2 | D2 | D2d | N1 | D3e | D23e | D23e | N1 | D34f | D234f | D234f | N1 | D345g | D2345g |
| N3 | D3 | D3e | N2 | D4f | D34f | D34f | N2 | D45g | D345g | D345g | N2 | D456a | D3456a |
| N4 | D4 | D4f | N3 | D5g | D45g | D45g | N3 | D56a | D456a | D456a | N3 | D056b | D0456b |
| N5 | D5 | D5g | N4 | D6a | D56a | D56a | N4 | D06b | D056b | D056b | N4 | D016c | D0156c |
| N6 | D6 | D6a | N5 | D0b | D06b | D06b | N5 | D01c | D016c | D016c | N5 | D012d | D0126d |

| 3 | | | | 4 | | | | 5 | | | |
|---|---|---|---|---|---|---|---|---|---|---|---|
| snd | to | rcv | res | snd | to | rcv | res | snd | to | rcv | res |
| D0123e | N6 | D1234f | D01234f | D01234f | N6 | D12345g | D012345g | D012345g | N6 | D123456a | D0123456a |
| D1234f | N0 | D2345g | D12345g | D12345g | N0 | D23456a | D123456a | D123456a | N0 | D023456b | D0123456b |
| D2345g | N1 | D3456a | D23456a | D23456a | N1 | D03456b | D023456b | D023456b | N1 | D013456c | D0123456c |
| D3456a | N2 | D0456b | D03456b | D03456b | N2 | D01456c | D013456c | D013456c | N2 | D012456d | D0123456d |
| D0456b | N3 | D0156c | D01456c | D01456c | N3 | D01256d | D012456d | D012456d | N3 | D012356e | D0123456e |
| D0156c | N4 | D0126d | D01256d | D01256d | N4 | D01236e | D012356e | D012356e | N4 | D012346f | D0123456f |
| D0126d | N5 | D0123e | D01236e | D01236e | N5 | D01234f | D012346f | D012346f | N5 | D012345g | D0123456g |

FIG. 10

EP 3 877 863 B1

1100

| Nodes | Initial | 0 | | | | 1 | | | | 2 | | | |
|---|---|---|---|---|---|---|---|---|---|---|---|---|---|
| | | snd | to | rcv | res | snd | to | rcv | res | snd | to | rcv | res |
| N0 | Da | Da | N1 | Dg | Dag | Dg | N1 | Df | Dafg | Df | N1 | De | Daefg |
| N1 | Db | Db | N2 | Da | Dab | Da | N2 | Dg | Dabg | Dg | N2 | Df | Dabfg |
| N2 | Dc | Dc | N3 | Db | Dbc | Db | N3 | Da | Dabc | Da | N3 | Dg | Dabcg |
| N3 | Dd | Dd | N4 | Dc | Dcd | Dc | N4 | Db | Dbcd | Db | N4 | Da | Dabcd |
| N4 | De | De | N5 | Dd | Dde | Dd | N5 | Dc | Dcde | Dc | N5 | Db | Dbcde |
| N5 | Df | Df | N6 | De | Def | De | N6 | Dd | Ddef | Dd | N6 | Dc | Dcdef |
| N6 | Dg | Dg | N0 | Df | Dfg | Df | N0 | De | Defg | De | N0 | Dd | Ddefg |

| 3 | | | | 4 | | | | 5 | | | |
|---|---|---|---|---|---|---|---|---|---|---|---|
| snd | to | rcv | res | snd | to | rcv | res | snd | to | rcv | res |
| De | N1 | Dd | Dadefg | Dd | N1 | Dc | Dacdefg | Dc | N1 | Db | **Dabcdefg** |
| Df | N2 | De | Dabefg | De | N2 | Dd | Dabdefg | Dd | N2 | Dc | **Dabcdefg** |
| Dg | N3 | Df | Dabcfg | Df | N3 | De | Dabcefg | De | N3 | Dd | **Dabcdefg** |
| Da | N4 | Dg | Dabcdg | Dg | N4 | Df | Dabcdfg | Df | N4 | De | **Dabcdefg** |
| Db | N5 | Da | Dabcde | Da | N5 | Dg | Dabcdeg | Dg | N5 | Df | **Dabcdefg** |
| Dc | N6 | Db | Dbcdef | Db | N6 | Da | Dabcdef | Da | N6 | Dg | **Dabcdefg** |
| Dd | N0 | Dc | Dcdefg | Dc | N0 | Db | Dbcdefg | Db | N0 | Da | **Dabcdefg** |

**FIG. 11**

1200

EP 3 877 863 B1

**Part 1**

| Nodes | Initial | 0 (preparation) | | | | 1 | | | | 2 | | | |
|---|---|---|---|---|---|---|---|---|---|---|---|---|---|
| | | snd | to | rcv | res | snd | to | rcv | res | snd | to | rcv | res |
| N0 | D0 | D0 | | D1 | D01 | D01bc | N4 | D45ad | D0145ad | D0145d | N6 | D236a | **D0123456a** |
| N1 | D1 | D1 | N0 | | | | | | | | | | |
| N2 | D2 | D2 | | D3 | D23 | D23cd | N6 | D6ab | D236ab | D236a | N0 | D0145b | **D0123456b** |
| N3 | D3 | D3 | N2 | | | | | | | | | | |
| N4 | D4 | D4 | | D5 | D45 | D45ad | N0 | D01bc | D0145bc | D0145b | N2 | D236c | **D0123456c** |
| N5 | D5 | D5 | N4 | | | | | | | | | | |
| N6 | D6 | D6 | | | D6 | D6ab | N2 | D23cd | D236cd | D236c | N4 | D0145d | **D0123456d** |

**Part 2**

| Nodes | Initial | 0 | | | | 1 | | | | 2 (finalization) | | | |
|---|---|---|---|---|---|---|---|---|---|---|---|---|---|
| | | snd | to | rcv | res | snd | to | rcv | res | snd | to | rcv | res |
| N0 | Da | Da | N2 | Dd | Dad | Dad | N4 | Dbc | Dabcd | Dabcd | N1 | | **Dabcd** |
| N1 | | | | | | | | | | | | Dabcd | **Dabcd** |
| N2 | Db | Db | N4 | Da | Dab | Dab | N6 | Dcd | Dabcd | Dabcd | N3 | | **Dabcd** |
| N3 | | | | | | | | | | | | Dabcd | **Dabcd** |
| N4 | Dc | Dc | N6 | Db | Dbc | Dbc | N0 | Dad | Dabcd | Dabcd | N5 | | **Dabcd** |
| N5 | | | | | | | | | | | | Dabcd | **Dabcd** |
| N6 | Dd | Dd | N0 | Dc | Dcd | Dcd | N2 | Dab | Dabcd | Dabcd | | | **Dabcd** |

**FIG. 12**

**FIG. 13**

1400

S1402

Receiving a data array to be used in the collective communication operation

S1404

Obtaining a distribution of the data items over the compute nodes

S1406

Obtaining network parameters of the data communications network

S1408

Determining a schedule for the Allreduce operation based on the length of the data array and the network parameters

S1410

Perform the Allreduce operation on the data array based on the schedule

**FIG. 14**

**FIG. 15**

| Topology view | Permutation view | | Notation |
|---|---|---|---|
| | General form | Cyclic form | |
| N0 N1 N2 N3 N4 N5 N6 | $\begin{pmatrix} 0 & 1 & 2 & 3 & 4 & 5 & 6 \\ 1 & 2 & 3 & 4 & 5 & 6 & 0 \end{pmatrix}$ | $\begin{pmatrix} 0 & 1 & 2 & 3 & 4 & 5 & 6 \end{pmatrix}$ | $c^1$ |
| N0 N1 N2 N3 N4 N5 N6 | $\begin{pmatrix} 0 & 1 & 2 & 3 & 4 & 5 & 6 \\ 2 & 3 & 4 & 5 & 6 & 0 & 1 \end{pmatrix}$ | $\begin{pmatrix} 0 & 2 & 4 & 6 & 1 & 3 & 5 \end{pmatrix}$ | $c^2$ |
| N0 N1 N2 N3 N4 N5 N6 | $\begin{pmatrix} 0 & 1 & 2 & 3 & 4 & 5 & 6 \\ 3 & 4 & 5 & 6 & 0 & 1 & 2 \end{pmatrix}$ | $\begin{pmatrix} 0 & 3 & 6 & 2 & 5 & 1 & 4 \end{pmatrix}$ | $c^3$ |

**FIG. 16**

EP 3 877 863 B1

**FIG. 17**

EP 3 877 863 B1

1800

**FIG. 18**

**FIG. 19**

**FIG. 20**

2100

Reduce-scatter

S1802: $c^3$

S1804: $c^5$

S1806: $c^6$

| $c^0d_0$ | $c^0d_0$ | $c^1d_1$ | $c^1d_1$ | $c^2d_2$ | $c^2d_2$ | $c^3d_3$ | $c^3d_3$ | $c^4d_4$ | $c^4d_4$ | $c^5d_5$ | $c^5d_5$ | $c^6d_6$ | $c^6d_6$ |

| $c^0d_{04}$ | $c^0d_0$ | $c^1d_{15}$ | $c^1d_1$ | $c^2d_{26}$ | $c^2d_2$ | $c^3d_{03}$ | $c^3d_3$ | $c^4d_{14}$ | $c^4d_4$ | $c^5d_{25}$ | $c^5d_5$ | $c^6d_{36}$ | $c^6d_6$ |

| $c^0d_{0426}$ | $c^5d_{025}$ | $c^1d_{0135}$ | $c^6d_{136}$ | $c^2d_{1246}$ | $c^0d_{024}$ | $c^3d_{0235}$ | $c^1d_{153}$ | $c^4d_{1346}$ | $c^2d_{264}$ | $c^5d_{0245}$ | $c^3d_{035}$ | $c^6d_{1356}$ | $c^4d_{146}$ |

| $c^0d_s$ | $c^1d_s$ | $c^2d_s$ | $c^3d_s$ | $c^4d_s$ | $c^5d_s$ | $c^6d_s$ |

**FIG. 21**

36

| # of cyclic permutations for the Allreduce | ω | | | | | | | | | | |
|---|---|---|---|---|---|---|---|---|---|---|---|
| | 0,001 | 0,01 | 0,1 | 0,3 | 0,6 | 1 | 1,4 | 1,8 | 10 | 100 | 1000 |
| 16 | **0,017** | **0,018** | 0,030 | 0,057 | 0,098 | 0,152 | 0,206 | 0,259 | 1,37 | 13,50 | 134,9 |
| 15 | 0,017 | 0,018 | 0,030 | 0,055 | 0,093 | 0,144 | 0,194 | 0,245 | 1,28 | 12,66 | 126,4 |
| 14 | 0,018 | 0,019 | **0,030** | 0,053 | 0,089 | 0,136 | 0,183 | 0,230 | 1,20 | 11,82 | 118,0 |
| 13 | 0,020 | 0,021 | 0,031 | **0,053** | 0,086 | 0,129 | 0,173 | 0,217 | 1,12 | 10,98 | 109,6 |
| 12 | 0,023 | 0,024 | 0,033 | 0,054 | **0,084** | 0,124 | 0,165 | 0,205 | 1,03 | 10,14 | 101,2 |
| 11 | 0,030 | 0,031 | 0,039 | 0,058 | 0,086 | **0,123** | **0,160** | 0,197 | 0,96 | 9,30 | 92,7 |
| 10 | 0,044 | 0,045 | 0,052 | 0,069 | 0,094 | 0,128 | 0,162 | **0,196** | 0,89 | 8,47 | 84,3 |
| 9 | 0,071 | 0,072 | 0,079 | 0,094 | 0,117 | 0,147 | 0,178 | 0,208 | 0,83 | 7,66 | 75,9 |
| 8 | 0,118 | 0,119 | 0,125 | 0,138 | 0,158 | 0,185 | 0,212 | 0,239 | **0,79** | **6,86** | **67,5** |

**FIG. 22**

2300

| ω | P | | | | | | | | | |
|---|---|---|---|---|---|---|---|---|---|---|
| | 7 | 15 | 31 | 63 | 127 | 255 | 511 | 1023 | 2047 | 4095 |
| 0,001 | bo | bo | bo | bo | bo | bo | bo | bo | bo | bo |
| 0,01 | bo | bo | bo | bo | bo | bo | bo | bo | 21 | 23 |
| 0,1 | bo | bo | bo | bo | 13 | 14 | 16 | 17 | 18 | 19 |
| 0,2 | bo | bo | bo | 11 | 12 | 13 | 15 | 16 | 17 | 18 |
| 0,3 | bo | bo | 9 | 10 | 12 | 13 | 14 | 15 | 16 | 18 |
| 0,4 | bo | 7 | 9 | 10 | 11 | 12 | 14 | 15 | 16 | 17 |
| 0,5 | 5 | 7 | 8 | 10 | 11 | 12 | 13 | 15 | 16 | 17 |
| 0,6 | 5 | 7 | 8 | 9 | 11 | 12 | 13 | 14 | 15 | 17 |
| 0,7 | 5 | 6 | 8 | 9 | 10 | 12 | 13 | 14 | 15 | 16 |
| 0,8 | 5 | 6 | 8 | 9 | 10 | 11 | 13 | 14 | 15 | 16 |
| 0,9 | 4 | 6 | 7 | 9 | 10 | 11 | 13 | 14 | 15 | 16 |
| 1 | 4 | 6 | 7 | 9 | 10 | 11 | 12 | 14 | 15 | 16 |
| 1,1 | 4 | 6 | 7 | 9 | 10 | 11 | 12 | 13 | 15 | 16 |
| 1,2 | 4 | 6 | 7 | 8 | 10 | 11 | 12 | 13 | 14 | 16 |
| 1,3 | 4 | 6 | 7 | 8 | 10 | 11 | 12 | 13 | 14 | 15 |
| 1,4 | 4 | 5 | 7 | 8 | 9 | 11 | 12 | 13 | 14 | 15 |
| 1,5 | 4 | 5 | 7 | 8 | 9 | 11 | 12 | 13 | 14 | 15 |
| 1,6 | 4 | 5 | 7 | 8 | 9 | 10 | 12 | 13 | 14 | 15 |
| 1,7 | lo | 5 | 7 | 8 | 9 | 10 | 12 | 13 | 14 | 15 |
| 1,8 | lo | 5 | 6 | 8 | 9 | 10 | 12 | 13 | 14 | 15 |
| 1,9 | lo | 5 | 6 | 8 | 9 | 10 | 11 | 13 | 14 | 15 |
| 10 | lo | lo | lo | lo | lo | lo | lo | lo | lo | 13 |
| 100 | lo | lo | lo | lo | lo | lo | lo | lo | lo | lo |

**FIG. 23**

EP 3 877 863 B1

2400

EP 3 877 863 B1

| # of cyclic permutations for the Allreduce | log(P)<br>8 | 9 | 10 | 11 | 12 | 13 | 14 | 15 | 2*log(P)<br>16 | 17 | ... | P-1<br>508 |
|---|---|---|---|---|---|---|---|---|---|---|---|---|
| Ring | | | | | | | | | | | ... | 1,99 |
| Recursive doubling | | 9 | | | | | | | | | ... | |
| Recursive halving | | | | | | | | | 2,99 | | ... | |
| Tree | | | | | | | | | 16 | | ... | |
| Method 1400 | 14 | 8,47 | 5,20 | 3,57 | 2,76 | 2,35 | 2,15 | 2,04 | 1,99 | | ... | |

**FIG. 24**

**FIG. 25**

FIG. 26

**FIG. 27**

EP 3 877 863 B1

**FIG. 28**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RUEFENACHT MARTIN et al.** Generalisation of recursive doubling for AllReduce: Now with simulation. *PARALLEL COMPUTING,* vol. 69, 24-33
- **ROLF RABENSEIFNER.** utomatic profiling of MPI applications with hardware performance counters. *PVM/MPI,* 1999, 35-42
- **R. THAKUR ; R. RABENSEIFNER ; W. GROPP.** Optimization of Collective Communication Operations in MPICH. *International Journal of High Performance Computing Applications,* 2005, vol. 19 (1
- **EDGAR GABRIEL et al.** Open MPI: Goals, Concept, and Design of a Next Generation MPI Implementation. *Proceedings, 11th European PVM/MPI Users' Group Meeting,* September 2004, 97-104